# EUROPEAN PATENT APPLICATION

(11) **EP 4 576 429 A1**
(43) Date of publication of application: **25.06.2025**
(21) Application number: 23862461.3
(22) Date of filing: 07.09.2023
(51) Int. Cl.: H01Q 1/52

(54) **ANTENNA STRUCTURE, ANTENNA, AND BASE STATION**

(30) Priority: 08.09.2022 CN 202211097500
(71) Applicant: Huawei Technologies Co., Ltd., Shenzhen, Guangdong 518129 (CN)
(72) Inventor: ZHANG, Yulu, Shenzhen, Guangdong 518129 (CN); BAI, Xue, Shenzhen, Guangdong 518129 (CN); XIE, Guoqing, Shenzhen, Guangdong 518129 (CN); XIAO, Weihong, Shenzhen, Guangdong 518129 (CN); LI, Lei, Shenzhen, Guangdong 518129 (CN)
(74) Representative: Körber, Martin Hans
(86) International application number: PCT/CN2023/117404
(87) International publication number: WO 2024/051767

(57) **Abstract**

This application provides an antenna mechanical part, including a conductive substrate and at least two structural units. Each of the at least two structural units encircles the conductive substrate once, and each structural unit and the conductive substrate are spaced apart. The at least two structural units include a first structural unit and a second structural unit that are adjacent to each other. The first structural unit and the second structural unit are spaced apart to form a first capacitor, and capacitance values of different parts of the first capacitor are different. This application further provides an antenna including the antenna mechanical part and a base station including the antenna. According to the solutions of this application, a problem of an electromagnetic shadow caused by blocking of a metal component can be mitigated.

## Description

This application claims priority to Chinese Patent Application No. 202211097500.2, filed with the China National Intellectual Property Administration on September 8, 2022 and entitled "ANTENNA MECHANICAL PART, ANTENNA, AND BASE STATION", which is incorporated herein by reference in its entirety.

### TECHNICAL FIELD

This application relates to the field of antenna technologies, and in particular, to an antenna mechanical part, an antenna, and a base station.

### BACKGROUND

In an antenna system, radiating elements may be blocked by surrounding metal components. When electromagnetic waves are propagated to the metal components, scattering occurs on surfaces of the metal components, the electromagnetic waves cannot be completely propagated to back sides of the metal components. Consequently, an electromagnetic shadow is generated at the back sides of the metal components. For a signal receiving process of an antenna, the electromagnetic shadow causes deterioration of quality of received signals of antenna apparatuses located at the back sides of the metal components. For a signal radiation process of the antenna, the electromagnetic shadow affects communication quality of terminals located at the back sides of the metal components.

### SUMMARY

This application provides an antenna mechanical part, an antenna, and a base station, to mitigate a problem of an electromagnetic shadow caused by blocking of a metal component.

According to a first aspect, a solution of this application provides an antenna mechanical part, used in a base station antenna system. The antenna mechanical part includes a conductive substrate and at least two structural units. Each of the at least two structural units encircles the conductive substrate once, and each structural unit and the conductive substrate are spaced apart. The at least two structural units include a first structural unit and a second structural unit that are adjacent to each other. The first structural unit and the second structural unit are spaced apart to form a first capacitor, and capacitance values of different parts of the first capacitor are different.

In this solution, the antenna mechanical part is a component that physically blocks a radiating element. The conductive substrate in the antenna mechanical part has conductivity, and the conductive substrate includes at least a conductive part. For example, all regions of the conductive substrate are conductors, or the conductive substrate includes a conductor part and an insulation part. The conductive substrate includes but is not limited to a metal member such as a pole, a pole support, a feeding network, a drive mechanism, and a support structure. The conductive substrate blocks an electromagnetic wave. The structural unit is a conductive structure that is disposed on an outer side of the conductive substrate and encircles the conductive substrate once, and the structural unit may be a thin layer. The structural unit and the conductive substrate may be separated, and the structural unit and the conductive substrate may not be directly connected, so that the structural unit and the conductive substrate may be electrically isolated. The first structural unit is adjacent to the second structural unit, a slot may be formed between the first structural unit and the second structural unit, and the slot may encircle the conductive substrate once. The first structural unit, the slot, and the second structural unit may substantially form the first capacitor, and both the first structural unit and the second structural unit may be used as a plate of the first capacitor. The capacitance values of the different parts (corresponding to different regions of the slot) of the first capacitor are different. In other words, some parts have large capacitance values, and the other parts have small capacitance values. At least one first capacitor may be formed in all structural units.

In this solution, the antenna mechanical part may be disposed near a wave source. When an electromagnetic wave emitted from the wave source is propagated to the antenna mechanical part, the electromagnetic wave is constrained to be propagated in the first capacitor along the slot, and is emitted out of a specific position in the slot. In this way, the electromagnetic wave can be propagated around the antenna mechanical part. Therefore, even though the antenna mechanical part blocks the wave source, because of the existence of the first capacitor, the electromagnetic wave can bypass the antenna mechanical part and be propagated to a back side of the antenna mechanical part. Therefore, in this solution, the at least two structural units are disposed on a periphery of the conductive substrate, and the first capacitor is formed, so that the conductive substrate has electromagnetic stealth performance relative to the electromagnetic wave, to reduce or avoid an electromagnetic shadow caused by blocking of the conductive substrate on the electromagnetic wave. In addition, because capacitance values of different regions of the first capacitor are different, electromagnetic wave signals of different frequency bands can all resonate in the slot based on respective electrical lengths of the electromagnetic wave signals, so that the electromagnetic waves of the different frequency bands can all pass through the slot. Therefore, the capacitance values of the different regions of the first capacitor are different, so that electromagnetic waves of a plurality of frequency bands can be allowed to pass through the slot, to expand a stealth bandwidth.

In an implementation of the first aspect, the first capacitor includes a first part, a second part, a third part, and a fourth part. The first part, the second part, the third part, and the fourth part are sequentially connected end to end. A capacitance value of the first part is equal to a capacitance value of the third part, a capacitance value of the second part is equal to a capacitance value of the fourth part, and the capacitance value of the first part is different from the capacitance value of the second part.

In this solution, the first capacitor may be divided into the foregoing four regions. The four regions are connected end to end to form an enclosure, and a capacitance value of the entire first capacitor forms a distribution pattern of a large capacitance-a small capacitance-a large capacitance-a small capacitance. A region with a large capacitance value may be equivalent to a patch antenna, and a region with a small capacitance value may be equivalent to a slot transmission line (slotline). The wave source may be close to the region with the large capacitance value, and the electromagnetic wave emitted from the wave source may enter the slot from one of the regions with the large capacitance value, and is divided into two paths: One path of the electromagnetic wave is constrained to be transmitted in one of the regions with the small capacitance value, and is emitted out of the other region with the large capacitance value; and the other path of the electromagnetic wave is constrained to be transmitted in the other region with the small capacitance value, and is emitted out of the other region with the large capacitance value as the previous path of the electromagnetic wave. According to the foregoing design in this solution, the electromagnetic wave can be diffracted based on a design requirement, so that electromagnetic stealth can be implemented, and a propagation characteristic of the electromagnetic wave can meet an antenna requirement.

In an implementation of the first aspect, the first part and the third part are centrally symmetrically distributed, and the second part and the fourth part are centrally symmetrically distributed.

In this solution, central symmetry means that structures of two parts are consistent, and one of the two parts overlaps the other of the two parts after being rotated around a symmetric center by 180 degrees. According to a central symmetry design, propagation characteristics (for example, a propagation direction, a polarization characteristic, and a frequency band) of the electromagnetic wave are consistent when the electromagnetic wave enters and exits the slot, to meet the antenna requirement.

In an implementation of the first aspect, there is a slot between the first structural unit and the second structural unit, and slot widths of different parts of the first capacitor are different.

In this solution, the capacitance value C of the first capacitor satisfies a capacitance formula: C=εS/d, where ε is a dielectric constant of a medium between plates, S is a plate area (that is, a facing area of the first structural unit and the second structural unit), and d is a distance (that is, a slot width) between the plates. In this solution, different slot widths are set for different parts of the first capacitor, so that the capacitance values of the different parts of the first capacitor are finally different, to expand the stealth bandwidth. It may be understood that, in this solution, at least the slot width is set, and certainly, the slot width d and at least one of the dielectric constant ε and the plate area S may be set, to achieve an objective that the capacitance values of the different parts of the first capacitor are different. A design of the solution is simple and mass production performance is good.

In an implementation of the first aspect, the first capacitor includes the first part and the second part that are connected to each other. Each of a slot of the first part and a slot of the second part has a same width, a slot width of the first part is less than a slot width of the second part, and the capacitance value of the first part is greater than the capacitance value of the second part. Alternatively, one of a slot of the first part and a slot the second part has a same width, and the other has a variable width. A maximum slot width of the first part is less than or equal to a minimum slot width of the second part, and the capacitance value of the first part is greater than the capacitance value of the second part.

In an implementation of this solution, the same width may mean that a slot is a slot with a uniform width, two sides of the slot are basically parallel, and slot widths at various positions of the slot may be consistent. The variable width may mean that a slot is a slot with a non-uniform width, two sides of the slot are not parallel, and slot widths at various positions of the slot are inconsistent.

For a first implementation of this solution, the slot width of the first part may be less than the slot width of the second part, and the capacitance value of the first part may be greater than the capacitance value of the second part, to facilitate expansion of the stealth bandwidth.

For a second implementation of this solution, regardless of whether the slot of the first part (or the slot of the second part) has the same width or the variable width, the maximum slot width (when the slot of the first part has the same width, the maximum width is a width at any position of the slot; or when the slot of the first part has the variable width, the maximum width is a width at a widest position of the slot) of the first part is less than or equal to the minimum slot width (when the slot of the second part has the same width, the minimum width is a width at any position of the slot; or when the slot of the second part has the variable width, the maximum width is a width at a narrowest position of the slot) of the second part, so that the slot of the first part is narrower than the slot of the second part as a whole. In addition, the capacitance value of the first part is greater than the capacitance value of the second part, to facilitate expansion of the stealth bandwidth.

In this solution, the foregoing design is applied to the slot of the first capacitor, so that good electromagnetic stealth and an effect of expanding the stealth bandwidth can be implemented. In addition, the design of the solution is simple, and mass production performance is good.

In an implementation of the first aspect, there is a slot between the first structural unit and the second structural unit. The first capacitor includes the first part and the second part that are connected to each other, the slot of the first part is formed by bending and connecting at least two sub-slots sequentially, and the capacitance value of the first part is greater than the capacitance value of the second part.

In this solution, the slot of the first part is formed by bending and connecting the at least two sub-slots sequentially, in other words, a plurality of sub-slots are sequentially connected, and every two adjacent sub-slots form a bending angle. The bending angle between the sub-slots may be designed based on a requirement, for example, may be 90°, and a formed slot may form a shape similar to a square wave. Alternatively, the bending angle between the adjacent sub-slots may not be limited to 90°, so that the slot forms another shape, for example, a curve shape (such as a sine curve or a parabola).

In this solution, the slot of the first part is designed into the foregoing shape, to increase a total length of the slot. According to the capacitance formula C=εS/d, if the total length of the slot increases, S increases, so that the capacitance value C can increase, to make the capacitance value of the first part large. This solution may be applied to the following scenario: When a first part whose slot width is less than a threshold cannot be manufactured due to a limitation of a manufacturing process, it may be considered that the first part is designed into the foregoing shape, and a slot length is increased to compensate for a process limitation that a slot width cannot be made smaller, so that the first part has a large capacitance value. Therefore, this solution can match an existing manufacturing process, and mass production performance is good.

In an implementation of the first aspect, the slot of the second part has a same width. Each sub-slot of the first part has a same width, all the sub-slots have a consistent width, and a width of the sub-slot is less than or equal to the slot width of the second part.

In this solution, the width of the sub-slot is the slot width of the first part. The slot width d1 of the first part is less than or equal to the slot width d2 of the second part, and a plate area S1 of the first part is greater than a plate area S2 of the second part, so that S1/d1>S2/d2. According to the capacitance formula C=εS/d, the capacitance value C1 of the first part is greater than the capacitance value C2 of the second part. Therefore, in this solution, slot lengths and slot widths of different regions of the first capacitor are comprehensively configured, so that the capacitance value of the first part is greater than the capacitance value of the second part, to expand the stealth bandwidth.

In an implementation of the first aspect, the first capacitor includes the first part and the second part that are connected to each other. The first part is filled with a first insulation medium, the second part is filled with a second insulation medium, a dielectric constant of the first insulation medium is greater than a dielectric constant of the second insulation medium, and the capacitance value of the first part is greater than the capacitance value of the second part.

In this solution, the first insulation medium may fill the slot of the first part, and the second insulation medium may fill the slot of the second part. The dielectric constant of the first insulation medium is greater than the dielectric constant of the second insulation medium, so that the parameter ε in the capacitance formula C=εS/d can be adjusted, so as to achieve an objective that the capacitance value of the first part is greater than the capacitance value of the second part, to expand the stealth bandwidth. In addition, the filled insulation medium does not affect transmission of an electromagnetic wave, and ensures that the electromagnetic wave can diffract the antenna mechanical part, to ensure an electromagnetic stealth effect.

In an implementation of the first aspect, the first capacitor includes the first part and the second part that are connected to each other. The antenna mechanical part includes a second capacitor, the second capacitor is disposed in the first part, and the capacitance value of the first part is greater than the capacitance value of the second part.

In this solution, different from the first capacitor (where the first capacitor is equivalent to a plate capacitor), the second capacitor is an independent capacitor component (which may have a pin). The second capacitor may be disposed in the slot of the first part. A total capacitance value of the first part is the capacitance value of the first part calculated according to the capacitance formula plus a capacitance value of the second capacitor. In this solution, the second capacitor is superimposed in the first part, so that the capacitance value of the first part is large, to expand the stealth bandwidth. A design of the solution is simple and mass production performance is good.

In an implementation of the first aspect, the antenna mechanical part includes a third capacitor, the third capacitor is disposed in the second part, and a capacitance value of the third capacitor is less than a capacitance value of the second capacitor.

In this solution, the third capacitor is also an independent capacitor component (which may have a pin), and the third capacitor may be disposed in the slot of the second part. A total capacitance value of the second part is the capacitance value of the second part calculated according to the capacitance formula plus a capacitance value of the third capacitor. In this solution, the second capacitor is superimposed in the first part, and the third capacitor is superimposed in the second part, so that the capacitance value of the first part is greater than the capacitance value of the second part, to expand the stealth bandwidth. A design of the solution is simple and mass production performance is good.

In an implementation of the first aspect, the capacitance value of the second capacitor and/or the capacitance value of the third capacitor are/is adjustable.

In this solution, that the capacitance value is adjustable means that a capacitor component can change a capacitance value under signal control, and such a capacitor component may be, for example, a varactor. According to the design in which the capacitance value is adjustable, a capacitance of a capacitor component in a corresponding region in a slot may be adaptively adjusted based on a change of a scanning angle of a wave source, to adjust a capacitance value of the region, and ensure an electromagnetic stealth effect of the antenna mechanical part on the wave source.

In an implementation of the first aspect, at least one structural unit is provided with a coupling slot, and parts of the structural unit that are respectively located on two sides of the coupling slot are separated by the coupling slot, and are coupled via the coupling slot.

In this solution, the structural unit may not be an integrated structure, but is provided with a coupling slot. The coupling slot completely separates the structural unit into different regions. There may be at least one coupling slot. The parts in the structural unit that are located on the two sides of the coupling slot are coupled via the coupling slot. When an electromagnetic wave is propagated to the structural unit, the electromagnetic wave may "cross" the coupling slot. There is at least one structural unit having the coupling slot. For example, the first structural unit and the second structural unit each have a coupling slot.

In this solution, a coupling slot is formed in a structural unit, so that different parts of the structural unit are sequentially assembled on the conductive substrate, and finally assembled into a complete structural unit. In this way, reliable assembly of the structural unit can be implemented in some scenarios. Especially when a size of the conductive substrate is large and a quantity of structural units is large, an assembly process can be simplified in a split assembly manner, and an assembly yield is improved. In addition, the coupling slot can allow electromagnetic waves of some frequency bands to pass through, so that the antenna mechanical part has a function of expanding a stealth bandwidth to some extent.

In an implementation of the first aspect, the antenna mechanical part includes an inductive element, and a structural unit in the at least two structural units is connected to the conductive substrate through the inductive element.

In this solution, the inductive element may be a conductive mechanical component, for example, a metal column. Alternatively, the inductive element may be an inductor (which may have a pin) belonging to an electronic element. The inductive element is connected to the structural unit and the conductive substrate. Each structural unit may be connected to the conductive substrate through at least one inductive element, or only some structural units may be connected to the conductive substrate through the inductive element.

In this solution, a capacitor (for example, referred to as a plate capacitor) may be formed between the structural unit and the conductive substrate, and the plate capacitor may affect a frequency band of an electromagnetic wave that bypasses the antenna mechanical part. For a product need (for example, a need to reduce a volume), it may be desirable to reduce a spacing between the structural unit and the conductive substrate. However, a decrease in the spacing may cause an increase in the frequency band of the electromagnetic wave that bypasses the antenna mechanical part, and change a propagation characteristic of the electromagnetic wave. In view of this, in this solution, the inductive element is disposed, the inductive element and the foregoing plate capacitor may form a parallel resonant circuit, and the parallel resonant circuit can reduce the frequency band of the electromagnetic wave that bypasses the antenna mechanical part. Therefore, disposing the inductive element and reducing the spacing between the structural unit and the conductive substrate may counteract each other's impact on the frequency band, so that the frequency band of the electromagnetic wave that bypasses the antenna mechanical part remains unchanged, to maintain the propagation characteristic of the electromagnetic wave.

In an implementation of the first aspect, at least one structural unit is hollowed out.

In this solution, hollowing out refers to hollowing out a local region of a structural unit to form a hole. At least one structural unit may feature such a hollow-out design. The hollow-out design can reduce a weight, and helps reduce a weight of the antenna mechanical part. Especially when the structural unit is a heavy metal member, providing a hollow region can greatly reduce the weight.

In an implementation of the first aspect, structures of the at least two structural units are the same, there is a slot between any two adjacent structural units, slots are of a same shape, and the first capacitor is formed between any two adjacent structural units.

In this solution, structures of all structural units are consistent. There is a slot between any two structural units, and the slots are of a same shape. In this way, the first capacitor is formed between any two adjacent structural units. In this solution, a plurality of first capacitors are formed on the antenna mechanical part, so that an electromagnetic wave can be diffracted in each region of the antenna mechanical part, to enable the entire antenna mechanical part to be hidden from the electromagnetic wave, so as to avoid an electromagnetic shadow. In this solution, all structural units can form a periodic stealth structure layer, and the periodic stealth structure layer is easy to manufacture and has good mass production performance.

In an implementation of the first aspect, structures of the at least two structural units are not totally the same, and/or there is a slot between the at least two structural units, shapes of slots are not totally the same, and the first capacitor is formed between any two adjacent structural units.

In this solution, "are not totally the same" means that any two are different; or at least two, but not all, are the same. In this solution, in comparison with the foregoing periodic stealth structure layer, all structural units may form a quasi-periodic stealth structure layer. The quasi-periodic stealth structure layer can adapt to an appearance structure of the conductive substrate. For example, if there is a protrusion at a position on an outer surface of the conductive substrate, a stealth structure layer may avoid the protrusion at the position, to form a quasi-periodic structure.

In an implementation of the first aspect, each structural unit includes a conductor layer and an insulation layer, and the insulation layer is located between the conductor layer and the conductive substrate; or each structural unit is a conductor.

In this solution, the conductor layer and the insulation layer in the structural unit are arranged in a stacked manner, the insulation layer is close to the conductive substrate, and the conductor layer faces away from the conductive substrate. The conductor layer is made of a conductor material, and the insulation layer is made of an insulation material. The conductor layer may be thin, and structural strength is weak. The conductor layer is attached to the insulation layer, and the insulation layer can support and strengthen the conductor layer. The structural unit of this structure can meet a product need and has good mass production performance.

In an implementation of the first aspect, the base station antenna system includes a pole, a pole support, and a feeding network, and the conductive substrate includes at least one of the pole, the pole support, and the feeding network.

In this solution, the antenna mechanical part may be used in the base station antenna system (or referred to as a base station). The base station antenna system includes a radiating element and the feeding network mounted in a radome. The radome is fastened to the pole through the pole support. The stealth structure layer is disposed on at least one of the pole, the pole support, and the feeding network, in other words, at least one of the pole, the pole support, and the feeding network and a structural unit on the at least one of the pole, the pole support, and the feeding network form an antenna mechanical part, so that blocking of the pole, the pole support, and the feeding network on an electromagnetic wave can be reduced or avoided, and the stealth bandwidth can be expanded.

According to a second aspect, a technical solution of this application provides an antenna, including a radiating element and the antenna mechanical part of any one of the foregoing implementations.

In this solution, the radiating element is close to the antenna mechanical part. The antenna mechanical part is disposed, so that electromagnetic waves received and sent by the radiating element can bypass the antenna mechanical part to be propagated, thereby mitigating a problem of an electromagnetic shadow.

According to a third aspect, a technical solution of this application provides a base station, including a pole and a first antenna. The first antenna is fastened to the pole, and the first antenna is the foregoing antenna.

In this solution, an antenna mechanical part is disposed in the first antenna, so that electromagnetic waves received and sent by a radiating element of the first antenna can bypass the antenna mechanical part to be propagated, thereby mitigating a problem of an electromagnetic shadow.

In an implementation of the third aspect, the base station includes a second antenna and a frequency selective surface. The frequency selective surface is located between the radiating element of the first antenna and a radiating element of a second antenna, and the frequency selective surface is configured to reflect a radiation signal of the first antenna and transmit a radiation signal of the second antenna.

In this solution, an operating frequency band of the second antenna may be different from an operating frequency band of the first antenna. The radiating element of the second antenna and the radiating element of the first antenna may be respectively located in different radomes, and the two radomes may be fastened to a same pole. In this way, the two antennas can be separately deployed, to implement a decoupling design and flexible deployment of antennas on different frequency bands. Alternatively, the radiating element of the second antenna and the radiating element of the first antenna may be in a same radome.

In this solution, the frequency selective surface is a two-dimensional structure including a plurality of units. All the units may be the same and arranged in a specific manner, or all the units are not totally the same and all the units are arranged in a specific manner. The frequency selective surface may be of a single-layer structure or of a multi-layer structure. The frequency selective surface has a specific frequency selection function, and may present transmittance for an incident wave of a frequency band in a resonance case, and reflectivity for an incident wave of another frequency band in the resonance case, so that transmission and reflection of incident electromagnetic waves can be effectively controlled. The frequency selective surface may be, for example, a spatial filter, and interacts with an electromagnetic wave to exhibit an evident band-pass or band-stop filtering characteristic. A multi-layer frequency selective surface may be used as a multi-order spatial filter, to expand a bandwidth and increase frequency selectivity. In this solution, the frequency selective surface can reflect most electromagnetic waves of the radiating element of the first antenna. Therefore, the frequency selective surface may be used as a reflection panel of the radiating element of the first antenna. The frequency selective surface can further transmit an electromagnetic wave of the radiating element of the second antenna. Therefore, the frequency selective surface does not block the radiating element of the second antenna, and the frequency selective surface is equivalent to electromagnetic transparency for the electromagnetic wave of the radiating element of the second antenna.

In this solution, the radiating element of the first antenna and the radiating element of the second antenna are respectively located on two sides of the frequency selective surface, so that the first antenna and the second antenna are arranged in a stacked manner. In the stacked arrangement, antennas with more frequency bands and channels can be deployed in a case of a limited dimension of an antenna aperture, to meet a communication requirement.

In this solution, the antenna mechanical part is disposed in the first antenna, so that the electromagnetic wave radiated by the second antenna bypasses the antenna mechanical part and continues being propagated, or the electromagnetic wave bypasses the antenna mechanical part and is received by the second antenna, thereby mitigating a problem of an electromagnetic shadow.

### BRIEF DESCRIPTION OF DRAWINGS

FIG. 1 shows an application scenario in which a base station performs wireless communication with a terminal;
FIG. 2 shows an assembly structure of an antenna system according to an embodiment of this application;
FIG. 3 shows an internal framework structure of a part of the antenna system in FIG. 2;
FIG. 4 shows an internal framework structure of a part of an antenna system according to an embodiment of this application;
FIG. 5 is a diagram of a three-dimensional structure of an antenna mechanical part according to an embodiment;
FIG. 6 is a diagram of a side sectional structure of the antenna mechanical part shown in FIG. 5;
FIG. 7 is a diagram of a three-dimensional structure of an antenna mechanical part according to an embodiment;
FIG. 8(a) is a diagram of a three-dimensional structure of an antenna mechanical part according to an embodiment;
FIG. 8(b) is a diagram of a locally enlarged structure at A in FIG. 8(a);
FIG. 9 is a diagram of a three-dimensional structure of an antenna mechanical part according to an embodiment;
FIG. 10 shows an application principle of the antenna mechanical part shown in FIG. 9 in an antenna system;
FIG. 11 is a diagram of a three-dimensional structure of an antenna mechanical part according to an embodiment;
FIG. 12 is a diagram of a three-dimensional structure of an antenna mechanical part according to an embodiment;
FIG. 13 is a diagram of a three-dimensional structure of an antenna mechanical part according to an embodiment;
FIG. 14 is a diagram of a three-dimensional structure of an antenna mechanical part according to an embodiment;
FIG. 15 is a diagram of a side view structure of the antenna mechanical part shown in FIG. 14;
FIG. 16 is a diagram of a three-dimensional structure of an antenna mechanical part according to an embodiment; and
FIG. 17 is a diagram of a three-dimensional structure of an antenna mechanical part according to an embodiment.

### Reference numerals:

1-antenna system; 11-pole; 12-pole support; 13-radome; 14-antenna apparatus; 15-radio frequency processing unit; 16-cable; 17-baseband processing unit; 18-feeding network; 181-phase shifter; 182-power splitter; 183-filter;
2-antenna system; 21-first radome; 22-first antenna apparatus; 221-first radiating element; 222-second radiating element; 23-frequency selective surface; 24-antenna mechanical part; 241-stealth structure layer; 242-phase shifter; 25-second radome; 26-second antenna apparatus;
3-antenna mechanical part; 3a-spacing; 31-conductive substrate; 32-structural unit; 32a-first capacitor; 32b-first part; 32c-second part; 32d-third part; 32e-fourth part; E-electric field direction; H-magnetic field direction; K-propagation direction of an electromagnetic wave;
4-antenna mechanical part; 41-conductive substrate; 42-structural unit; 42b-first part; 42c-second part;
5-antenna mechanical part; 51-conductive substrate; 52-structural unit; 52b-first part; 52d-sub-slot; 52c-second part;
6-antenna mechanical part; 61-conductive substrate; 62-structural unit; 62b-first part; 62c-second part; 62d-third part; 62e-fourth part;
7-antenna mechanical part; 71-conductive substrate; 72-structural unit; 721-first part; 722-second part; 723-third part; 724-fourth part; 72b-first part; 72c-second part; 72f-coupling slot; 72g-coupling slot; 72h-coupling slot; 72i-coupling slot;
8-antenna mechanical part; 81-conductive substrate; 82-structural unit; 821-first part; 822-second part; 82b-first part; 82c-second part; 82f-coupling slot; 82g-coupling slot;
9-antenna mechanical part; 91-conductive substrate; 92-structural unit; 92b-first part; 92c-second part; 92f-hollow region; 92g-hollow region;
10-antenna mechanical part; 101-conductive substrate; 102-structural unit; 102a-first capacitor; 103a-first insulation medium; 103b-second insulation medium;
20-antenna mechanical part; 201-conductive substrate; 202-structural unit; 202a-first capacitor; 203-second capacitor component; 204-first capacitor component;
30-antenna mechanical part; 301-conductive substrate; 302-structural unit; 302a-first capacitor; 303-inductive element.

### DESCRIPTION OF EMBODIMENTS

The following describes the technical solutions in embodiments of this application with reference to the accompanying drawings in embodiments of this application. It is clear that the described embodiments are merely a part rather than all of embodiments of this application.

The terms "first", "second", and the like in embodiments of this application are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

In embodiments of this application, position terms such as "up" and "down" are defined relative to positions of schematic structural placement in the accompanying drawings. It should be understood that these directional terms are relative concepts used for relative descriptions and clarifications, and may vary accordingly with changes of the positions of the structures.

In embodiments of this application, unless otherwise specified, "and/or" is merely an association relationship for describing an associated object, and represents that three relationships may exist. For example, A and/or B may represent the following three cases: Only A exists alone, both A and B exist, and only B exists.

An embodiment of this application provides an antenna system. The antenna system may be used in any device or system that can radiate and receive an antenna signal. For example, the antenna system may be used in a radar system on a ship. Alternatively, the antenna system may be a base station, and the antenna system may include, for example, a base station antenna system of the base station. The following first describes the base station, and then uses an example in which the antenna system includes a base station antenna system for description.

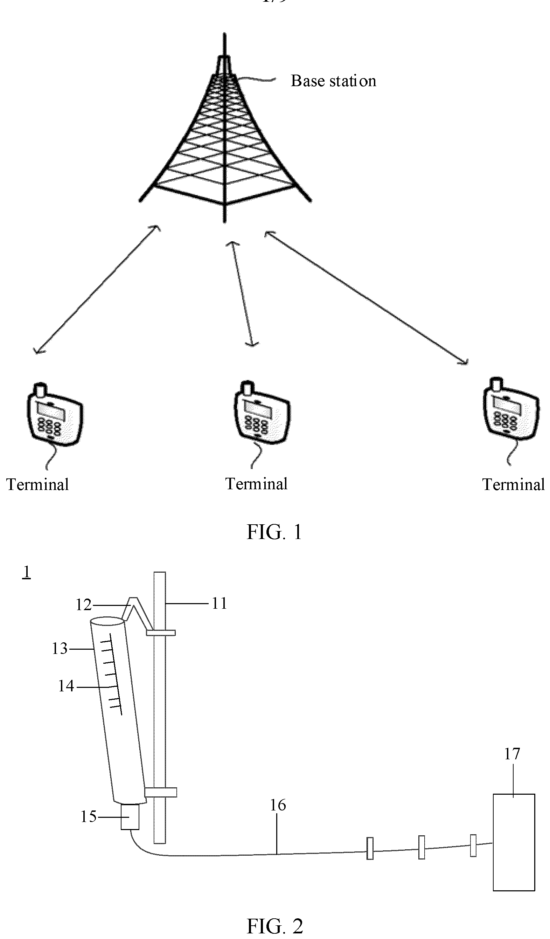

FIG. 1 shows an application scenario in which a base station performs wireless communication with a terminal. As shown in FIG. 1, the base station is configured to perform cell coverage of a radio signal, to implement communication between a terminal device and a radio network. Specifically, the base station may be a base transceiver station (base transceiver station, BTS) in a global system for mobile communications (global system for mobile communications, GSM) or a code division multiple access (code division multiple access, CDMA) system, may be a NodeB (NodeB, NB) in a wideband code division multiple access (wideband code division multiple access, WCDMA) system, may be an evolved NodeB (evolved NodeB, eNB) in a long term evolution (long term evolution, LTE) system, or may be a radio controller in a cloud radio access network (cloud radio access network, CRAN) scenario. Alternatively, the base station may be a relay station, an access point, a vehicle-mounted device, a wearable device, a g node (gNodeB or gNB) in a new radio (new radio, NR) system, a base station in a future evolved network, or the like. This is not limited in embodiments of this application.

The base station is equipped with an antenna to implement signal transmission in space. FIG. 2 is a diagram of an application scenario of an antenna that the base station (or referred to as a base station antenna system, in other words, an antenna system 1 in FIG. 2) shown in FIG. 1 is equipped with. As shown in FIG. 2, the antenna system 1 may include a pole 11, a pole support 12, a radome 13, an antenna array 14, a radio frequency processing unit 15, a cable 16, and a baseband processing unit 17. The pole support 12, the radome 13, and the antenna array 14 may be collectively referred to as an antenna, and the antenna may further include a feeding network, a reflection panel, and the like that are to be described below.

The pole 11 may be fastened to the ground. The pole support 12 is connected to the pole 11 and the radome 13, and the radome 13 is fastened to the pole 11 through the pole support 12. The antenna array 14 may be mounted in the radome 13. A feeding network may be further mounted in the radome 13. The radome 11 has a good electromagnetic wave penetration characteristic and weatherability, and can protect components mounted in the radome 11.

The antenna array 14 is configured to radiate and receive antenna signals. The antenna array 14 may include a plurality of radiating elements that are arranged in an array according to a specific rule, and each radiating element can radiate and receive electromagnetic waves. The radiating element may also include an antenna element. In the antenna array 14, operating frequency bands of different radiating elements may be the same or different.

In some embodiments, the antenna may further include the reflection panel. The reflection panel may also be referred to as a bottom plate, an antenna panel, a reflection surface, or the like. For example, the reflection panel may be manufactured by using a metal material. The radiating element may be mounted on a surface on one side of the reflection panel. When the radiating element receives an antenna signal, the reflection panel may reflect and aggregate the antenna signal on a receiving point, to implement directional receiving. When the radiating element transmits an antenna signal, the reflection panel may implement directional transmission of the antenna signal. The reflection panel may enhance a capability of receiving or transmitting an antenna signal of the radiating element, and may further block and shield an interference effect of another signal from a back (where the back refers to a side of the reflection panel facing away from the radiating element) of the reflection panel on the antenna signal, to improve a gain of an antenna.

The radio frequency processing unit 15 (which may also be referred to as a remote radio unit (remote radio unit, RRU)) may be connected to the feeding network via a jumper, and is electrically connected to the antenna array 14 via the feeding network. The feeding network (which is further described below) may be used as a signal transmission path between the radio frequency processing unit 15 and the antenna array 14. The radio frequency processing unit 15 may be electrically connected to the baseband processing unit 17 (which may also be referred to as a baseband unit (baseband unit, BBU)) via the cable 16 (for example, an optical cable). As shown in FIG. 2, both the radio frequency processing unit 15 and the baseband processing unit 17 may be located outside the radome 13, and the radio frequency processing unit 15 may be located at a near end of the antenna.

The radio frequency processing unit 15 may perform frequency selection, amplification, and down-conversion on an antenna signal received by the antenna array 14, convert a processed antenna signal into an intermediate frequency signal or a baseband signal, and send the intermediate frequency signal or the baseband signal to the baseband processing unit 17. The radio frequency processing unit 15 may alternatively perform up-conversion and amplification on the baseband processing unit 17 or an intermediate frequency signal, and convert the baseband processing unit 17 or a processed intermediate frequency signal into an electromagnetic wave through the antenna array 14 and send the electromagnetic wave.

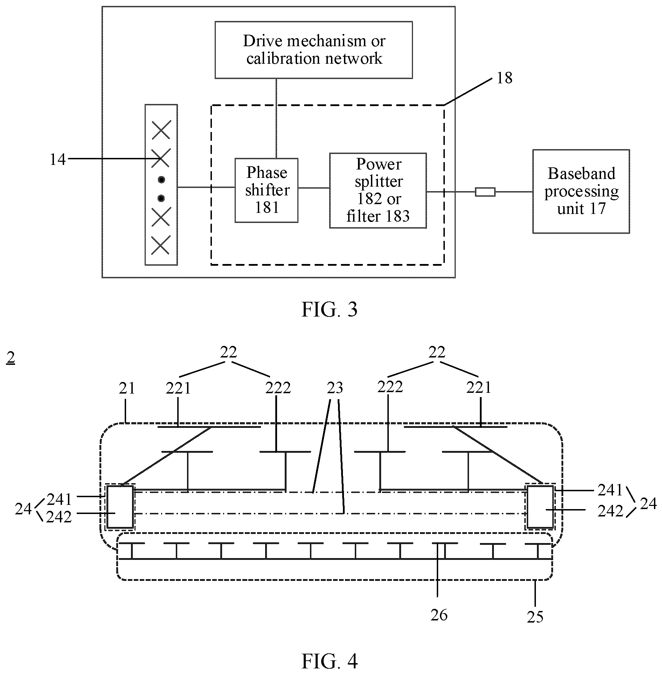

FIG. 3 may show an internal framework structure of a part of the antenna system 1 in FIG. 2. As shown in FIG. 3, the antenna array 14 of the antenna system 1 is connected to a feeding network 18. The feeding network 18 may implement different radiation beam directions through a drive mechanism, or may be connected to a calibration network to obtain a calibration signal required by the antenna system 1. The feeding network 18 may feed a signal to the antenna array 14 based on a specific amplitude and phase, or send a received signal to the baseband processing unit 17 based on a specific amplitude and phase.

For example, the feeding network 18 may include a phase shifter 181, and the phase shifter 181 is configured to change a maximum direction of antenna signal radiation. The feeding network 18 may further include a module configured to extend performance, for example, a power splitter 182. The power splitter 182 is configured to combine multiple signals into one signal, and transmit the signal through the antenna array 14; or the power splitter 182 divides one signal into multiple signals, for example, divides, based on different frequencies, a signal received by the antenna array 14 into multiple signals, and transmits the multiple signals to the baseband processing unit 17 for processing. The feeding network 18 may further include a filter 183, configured to filter out an interference signal.

A structure of the antenna system 1 shown in FIG. 2 and FIG. 3 is merely an example. Actually, a structure of the antenna system in embodiments of this application may be flexibly designed based on a product requirement, and is not limited to the foregoing descriptions. For example, the antenna system may alternatively not include the pole 11, and the radome 13 may be fastened to a tower through the pole support 12.

In the antenna system, an antenna apparatus may be blocked by surrounding conductor components (where the conductor component includes at least a conductive part, for example, all regions of the conductor component are conductors, or the conductor component includes a conductor part and an insulation part, and in the following, the conductor component is referred to as a conductive substrate). When an electromagnetic wave is propagated to the conductor components, scattering occurs on surfaces of the conductor components, preventing the electromagnetic wave from being completely propagated to back sides of the conductor components. Consequently, an electromagnetic shadow is generated at the back sides of the conductor components. For a signal receiving process of the antenna apparatus, the electromagnetic shadow causes deterioration of quality of received signals of antenna apparatuses located at the back sides of the conductor components. For a signal radiation process of the antenna apparatus, the electromagnetic shadow affects communication quality of terminals located at the back sides of the conductor components.

To resolve the foregoing problem, for the antenna system in embodiments of this application, an "electromagnetic stealth" design is used for a conductor component around the antenna apparatus, so that an electromagnetic wave can bypass the conductor component and continue being propagated, to reduce or eliminate an electromagnetic shadow. Details are described below.

FIG. 4 shows an internal framework structure of a part of an antenna system 2 in an embodiment. The antenna system 2 features the foregoing electromagnetic stealth design.

As shown in FIG. 4, the antenna system 2 may include a first antenna and a second antenna. The first antenna may include a first radome 21, a first radiating element 22, a frequency selective surface 23, and an antenna mechanical part 24. The second antenna may include a second radome 25 and a second radiating element 26.

The first radome 21 and the second radome 25 are two independent radomes, and the two radomes may be fastened to a same pole or tower. The first radiating element 22, the frequency selective surface (frequency selective surface, FSS) 23, and the antenna mechanical part 24 may all be located in the first radome 21, and the second radiating element 26 may be located in the second radome 25.

As shown in FIG. 4, for example, the first radiating element 22 may include a third radiating element 221 and a fourth radiating element 222. There may be a plurality of third radiating elements 221 and a plurality of fourth radiating elements 222. Operating frequency bands of the third radiating element 221 and the fourth radiating element 222 may be different. For example, the operating frequency band of the third radiating element 221 may range from 690 MHz to 960 MHz, and the operating frequency band of the fourth radiating element 222 may range from 1427 MHz to 2690 MHz. Both the third radiating element 221 and the fourth radiating element 222 may be connected to respective feeding networks. For example, an operating frequency band of the second radiating element 26 may range from 3.3 GHz to 3.8 GHz. It may be understood that another component, for example, a feeding network connected to the second radiating element 26, may be further disposed in the second radome 25.

In this embodiment, the first radiating element 22 and the second radiating element 26 are respectively disposed in different radomes, so that the two antennas may be separately deployed, to implement a decoupling design and flexible deployment of antennas on different frequency bands. It may be understood that this solution is merely an example. **In** another embodiment, the first radiating element 22 and the second radiating element 26 may alternatively be in a same radome.

As shown in FIG. 4, both the frequency selective surface 23 and the first radiating element 22 may be located in the first radome 21, and the frequency selective surface 23 may be located between the first radiating element 22 and the second radiating element 26. Therefore, the first radiating element 22 and the second radiating element 26 may be considered to be arranged in a stacked manner. In the stacked arrangement, antennas with more frequency bands and channels can be deployed in a case of a limited dimension of an antenna aperture, to meet a communication requirement.

The frequency selective surface 23 is a two-dimensional structure including a plurality of units. All the units may be the same and arranged in a specific manner (where such a frequency selective surface 23 may be considered to be of a periodic array structure), or all the units are not totally the same (where any two units are different; or at least two units are the same but not all the units are the same) and all the units are arranged in a specific manner (where such a frequency selective surface 23 may be considered to be of a quasi-periodic array structure). The frequency selective surface 23 may be of a single-layer structure or of a multi-layer structure. For example, the frequency selective surface 23 in FIG. 3 may be of a two-layer structure. When the frequency selective surface 23 is of a multi-layer structure, various layers of the frequency selective surface 23 may be separated through an insulation material or air.

The frequency selective surface 23 has a specific frequency selection function, and may present transmittance for an incident wave of a frequency band in a resonance case, and reflectivity for an incident wave of another frequency band in the resonance case, so that transmission and reflection of incident electromagnetic waves can be effectively controlled. The frequency selective surface 23 may be, for example, a spatial filter, and interacts with an electromagnetic wave to exhibit an evident band-pass or band-stop filtering characteristic. The multi-layer frequency selective surface 23 may be used as a multi-order spatial filter, to expand a bandwidth and increase frequency selectivity.

In this embodiment, the frequency selective surface 23 can reflect most electromagnetic waves radiated by the third radiating element 221 and the fourth radiating element 222. Therefore, the frequency selective surface 23 may be used as a reflection panel of the third radiating element 221 and the fourth radiating element 222. The frequency selective surface 23 can also transmit an electromagnetic wave radiated by the second radiating element 26. Therefore, the frequency selective surface 23 does not block the second radiating element 26, and the frequency selective surface 23 is equivalent to electromagnetic transparency for the electromagnetic wave radiated by the second radiating element 26.

As shown in FIG. 4, the antenna mechanical part 24 may be located between the first radiating element 22 and the second radiating element 26. The antenna mechanical part 24 may be a feeding network that features the electromagnetic stealth design, for example, may be a phase shifter that features the electromagnetic stealth design.

As shown in FIG. 4, for example, the antenna mechanical part 24 may include a phase shifter 242 and a stealth structure layer 241 that covers an outer surface of the phase shifter 242. The phase shifter 242 may be connected to the third radiating element 221 and the fourth radiating element 222. The phase shifter 242 has a metal housing, and the phase shifter 242 may be referred to as a conductive substrate. The phase shifter 242 located between the first radiating element 22 and the second radiating element 26 may block a signal of the second radiating element 26. The stealth structure layer 241 may cover a local outer surface or the whole outer surface of the phase shifter 242. The stealth structure layer 241 can enable an electromagnetic wave to bypass the phase shifter 242 and continue being propagated, to reduce or eliminate an electromagnetic shadow, and ensure transceiver performance of the second radiating element 26. A specific structure and a working principle of the stealth structure layer 241 are described in detail below.

The antenna mechanical part 24 in the foregoing embodiment is a feeding network that features the electromagnetic stealth design, and this is merely an example. Actually, the stealth structure layer may be disposed on an outer surface of any conductive substrate that may block a signal of the second radiating element 26 in the antenna system 2, to form an antenna mechanical part.

With reference to FIG. 2, the following continues to list antenna mechanical parts in several antenna systems.

Refer to FIG. 2. The pole 11 may block a signal of the antenna array 14 in the radome 13, and a stealth structure layer may cover an outer surface of the pole 11. Specific distribution of the stealth structure layer may be determined based on a requirement. For example, the stealth structure layer may cover a corresponding local region on the outer surface of the pole 11 based on a scanning range of the antenna array 14, or the stealth structure layer may cover the whole outer surface of the pole 11. In this solution, the pole 11 is used as a conductive substrate, and the pole 11 and the stealth structure layer may form an antenna mechanical part.

Similarly, the pole support 12 may be used as a conductive substrate, and the pole support 12 and a stealth structure layer on the pole support 12 may form another antenna mechanical part.

Alternatively, another metal member (such as a drive mechanism or a support structure) in the antenna system 1 may be used as a conductive substrate, and the metal member and a stealth structure layer on the metal member may form another antenna mechanical part.

The following describes the electromagnetic stealth design of the antenna mechanical part in embodiments of this application in detail. It may be understood that the antenna mechanical part described below may be used in any antenna system, for example, the antenna system 1 shown in FIG. 2 and the antenna system 2 shown in FIG. 4.

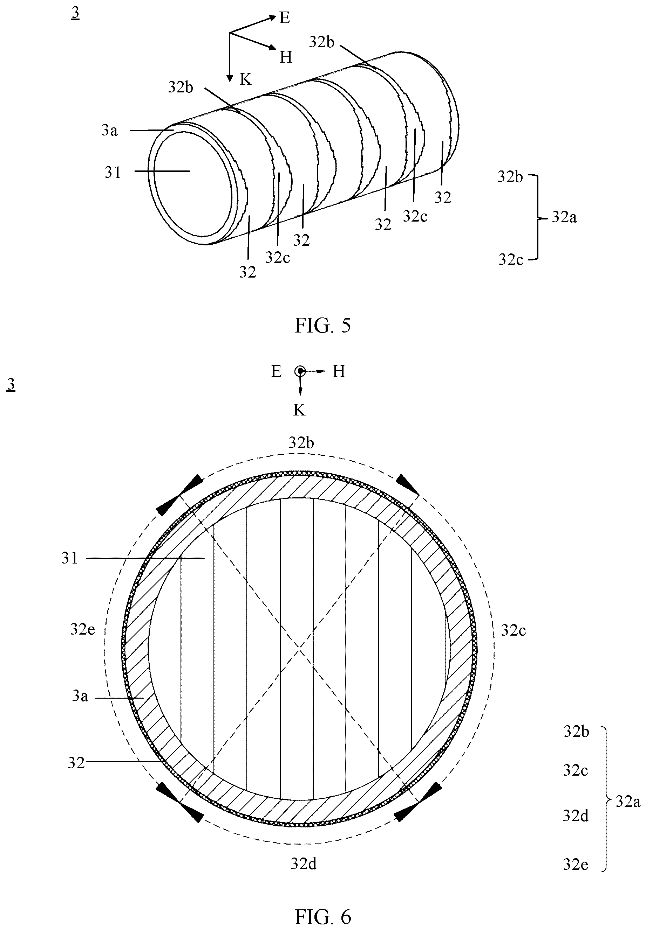

FIG. 5 shows a principle three-dimensional structure of an antenna mechanical part 3 in an embodiment, and FIG. 6 shows a principle side view structure of the antenna mechanical part 3 in FIG. 5. As shown in FIG. 5 and FIG. 6, the antenna mechanical part 3 may include a conductive substrate 31 and at least two structural units 32.

For example, the conductive substrate 31 may be approximately cylindrical, and an axial length of the conductive substrate 31 is, for example, at least 1*λ (where λ is a wavelength corresponding to a lowest frequency band of an antenna apparatus blocked by the conductive substrate 31). It may be understood that the approximately cylindrical conductive substrate 31 is merely an example, and an actual shape and structure of the conductive substrate are not limited in embodiments of this application. For example, a cross-sectional shape of the conductive substrate includes but is not limited to a quadrilateral, a circle, an ellipse, a hexagon, and the like.

FIG. 5 shows an example of five structural units 32. A structure of the structural unit 32 may be designed based on a requirement, for example, may be in a sheet shape or a ring shape. All the structural units 32 may be collectively referred to as a stealth structure layer.

As shown in FIG. 5, all the structural units 32 are located on an outer side of the conductive substrate 31. In an implementation shown in FIG. 5, these structural units 32 may only encircle an outer side of an outer circumferential surface (where the outer circumferential surface is a surface that encircles an axial line of the conductive substrate 31) of the conductive substrate 31, and are not disposed on an outer side of an end surface (where the end surface is a surface that is perpendicular to the axial line of the conductive substrate 31) of the conductive substrate 31. In another implementation, the structural unit 32 may be distributed on both the outer side of the outer circumferential surface and the outer side of the end surface. The following uses the implementation shown in FIG. 5 as an example for further description.

In an implementation of this embodiment, the structural unit 32 may be made of a conductor material, and the structural unit 32 may be, for example, a sheet metal-formed metal member whose weight and structural strength are large. In another implementation of this embodiment, the structural unit 32 may include a conductor layer and an insulation layer. The conductor layer and the insulation layer are arranged in a stacked manner, the insulation layer is close to the conductive substrate 31, and the conductor layer faces away from the conductive substrate 31. The conductor layer is made of a conductor material, and the insulation layer is made of an insulation material. The conductor layer may be thin, and structural strength is weak. The conductor layer is attached to the insulation layer, and the insulation layer can support and strengthen the conductor layer.

As shown in FIG. 5 and FIG. 6, there is a spacing 3a between each structural unit 32 and the conductive substrate 31, in other words, each structural unit 32 and the conductive substrate 31 are separated, and are not directly connected. A radial size (that is, a size of the spacing 3a in a radial direction of the conductive substrate 31, where the size may also be referred to as an electrical thickness) of the spacing 3a may be, for example, 0.5*λ (where λ is the wavelength corresponding to the lowest frequency band of the antenna apparatus blocked by the conductive substrate 31).

As shown in FIG. 5 and FIG. 6, in this embodiment, for a structural unit 32 made only of the conductor material, an insulation medium (where the insulation medium is represented by a shadow of a diagonal line in FIG. 6) may be filled in the spacing 3a between the structural unit 32 and the conductive substrate 31. In an implementation, the insulation medium may be continuously distributed and cover the entire outer circumferential surface of the conductive substrate 31, in other words, the insulation medium is distributed in the spacing 3a, and is also distributed in a slot between adjacent structural units 32 (where the slot is further described below). In another implementation, the insulation medium is distributed discretely on the entire outer circumferential surface of the conductive substrate 31. For example, the insulation medium is distributed only in the spacing 3a, but is not distributed in the slot between adjacent structural units 32. An insulation medium in each spacing 3a may be discretely distributed, insulation media at various positions form a structure similar to a plurality of connecting columns, a gap is formed between the insulation media at various positions, and air exists in the gap; or the insulation medium in each spacing 3a is continuously distributed.

In this embodiment, the insulation medium can connect the structural unit 32 to the conductive substrate 31, and can also electrically isolate the structural unit 32 from the conductive substrate 31.

In this embodiment, the insulation media at various positions on the outer circumferential surface of the conductive substrate 31 is made of a same material, in other words, the insulation media at various positions on the outer circumferential surface of the conductive substrate 31 have a same dielectric constant. In another embodiment, the insulation media at various positions on the outer circumferential surface of the conductive substrate may be different materials with different dielectric constants, and this solution is further described below.

In this embodiment, for the structural unit 32 including the conductor layer and the insulation layer, the insulation layer in the structural unit 32 may replace the insulation medium in the spacing 3a, and therefore the spacing 3a may not need to be filled with the insulation medium. It may be understood that, based on a product requirement, the structural unit 32 including the insulation layer may alternatively be filled with the insulation medium.

In this embodiment, the insulation medium (for example, the insulation medium that is distributed discretely) may also be referred to as an insulation support, and the insulation support is configured to connect the structural unit 32 and the conductive substrate 31 and isolate the structural unit 32 from the conductive substrate 31. When there is no insulation medium and the structural unit 32 includes the insulation layer and the conductive layer, the insulation layer may also be referred to as an insulation support, and the structural unit 32 is connected to the conductive substrate 31 through the insulation support, and is isolated from the conductive substrate 31.

As shown in FIG. 5, all structural units 32 may be sequentially distributed at intervals in an axial direction of the conductive substrate 31, a slot may be formed between every two adjacent structural units 32 (where one of the structural units 32 may be referred to as a first structural unit, and the other one of the structural units 32 may be referred to as a second structural unit), and the slot encircles the conductive substrate 31 once. The insulation medium may be distributed in the slot, or may not be distributed in the slot. Each structural unit 32 has conductivity, so that the slot can substantially form a capacitor, which may be referred to as a first capacitor 32a. Structural units 32 on two sides of the first capacitor 32a may be used as plates of the first capacitor 32a. When the insulation medium is distributed in the slot, the insulation medium in the slot may also be used as a component of the first capacitor 32a.

As shown in FIG. 5 and FIG. 6, the first capacitor 32a may include a first part 32b, a second part 32c, a third part 32d, and a fourth part 32e, and the four regions are sequentially connected end to end. The first part 32b and the third part 32d may be centrally symmetrical, and a symmetric center of the first part 32b and the third part 32d may be an axis of the conductive substrate 31. The first part 32b and the third part 32d are centrally symmetrically distributed. This means that structures of the first part 32b and the third part 32d are consistent (that the structures are consistent includes that distribution of insulation media in the two regions is also consistent), and one of the first part 32b and the third part 32d overlaps the other one after being rotated around the symmetric center by 180 degrees. The second part 32c and the fourth part 32e may be centrally symmetrical, and a symmetric center of the second part 32c and the fourth part 32e may be the axis of the conductive substrate 31. The second part 32c and the fourth part 32e are centrally symmetrically distributed. This means that structures of the second part 32c and the fourth part 32e are consistent (that the structures are consistent includes that distribution of insulation media in the two regions is also consistent), and one of the second part 32c and the fourth part 32e overlaps the other one after being rotated around the symmetric center by 180 degrees.

In this embodiment, a capacitance value C of the first capacitor 32a satisfies a capacitance formula: C=εS/d, where ε is a dielectric constant of a medium between plates, S is a plate area, and d is a distance between the plates. The plates are the structural units 32 on two sides of the first capacitor 32a, the medium between the plates is the insulation medium (in a case in which the insulation medium is distributed in the slot between the structural units 32) or air (in a case in which the insulation medium does not exist in the slot between the structural units 32), S is a facing area of the adjacent structural units 32, and d is a slot width.

In this embodiment, because the first part 32b and the third part 32d are centrally symmetrically distributed, it can be learned from the foregoing capacitance formula that capacitance values of the first part 32b and the third part 32d are equal. Similarly, because the second part 32c and the fourth part 32e are centrally symmetrically distributed, capacitance values of the second part 32c and the fourth part 32e are equal. The following continues to describe features of the first capacitor 32a by using the first part 32b and the second part 32c as description objects.

As shown in FIG. 5, a slot corresponding to the first part 32b may have a uniform width. To be specific, two sides of the slot of the first part 32b are basically parallel, and slot widths at various positions of the first part 32b may be consistent, or the slot of the first part 32b is considered to have a same width. A slot corresponding to the second part 32c may have a non-uniform width. To be specific, two sides of the slot of the second part 32c are not parallel, and slot widths at various positions of the second part 32c are inconsistent, or the slot of the second part 32c is considered to have a variable width. For example, two sides of the slot of the second part 32c may be curves (for example, arcs), slot widths at two ends of the second part 32c may be small, slot widths in a middle part between the two ends may be large, and the slot widths may gradually change from the two ends to the middle part. Therefore, the slot widths at various positions of the second part 32c are inconsistent.

As shown in FIG. 5, a maximum slot width (that is, a slot width at any position of the first part 32b) of the first part 32b may be less than or equal to a minimum slot width (for example, a slot width at a position of connecting the second part 32c and the first part 32b) of the second part 32c. In other words, from a perspective of the whole, a slot width of the first part 32b is less than a slot width of the second part 32c. Therefore, it can be learned from the foregoing capacitance formula that the capacitance value of the first part 32b is greater than the capacitance value of the second part 32c.

In conclusion, in the first capacitor 32a, the slot width of the first part 32b=a slot width of the third part 32d<the slot width of the second part 32c=a slot width of the fourth part 32e, and the capacitance value of the first part 32b=the capacitance value of the third part 32d>the capacitance value of the second part 32c=the capacitance value of the fourth part 32e. In other words, slot widths of different regions of the first capacitor 32a are different, and therefore, capacitance values of different regions of the first capacitor 32a are different.

As shown in FIG. 5, in the antenna mechanical part 3, shapes of all the structural units 32 are consistent and the structural units 32 are evenly distributed at intervals, so that shapes of all slots are also consistent and the slots are evenly distributed at intervals. A stealth structure layer formed in this way may be considered to be of a periodic structure.

In another implementation, the shapes of all the structural units 32 may not be totally the same (this means that shapes of any two structural units 32 are different; or at least two structural units 32 are of a same shape, but not all the structural units 32 are of a same shape), and/or all the structural units 32 may not be evenly distributed at intervals (this means that for all slots between the structural units 32, any two slots are of different shapes; or at least two slots are of a same shape, but not all the slots are of a same shape). In this way, shapes of all the slots are not totally consistent and/or the slots are not evenly distributed at intervals, and a stealth structure layer formed in this way may be considered to be of a quasi-periodic structure. For example, the quasi-periodic structure may be a structure obtained by deleting a plurality of structural units from the periodic structure. The stealth structure layer of the quasi-periodic structure can adapt to an appearance structure of the conductive substrate 31. For example, if there is a protrusion at a position on an outer surface of the conductive substrate 31, the stealth structure layer may avoid the protrusion at the position, to form the quasi-periodic structure.

The following describes an electromagnetic stealth principle of the antenna mechanical part 3.

FIG. 5 and FIG. 6 further show a relationship between a wave source and the antenna mechanical part 3. The wave source is a source of an electromagnetic wave. For a radiation process of the antenna apparatus, the wave source is the antenna apparatus. For a receiving process of the antenna apparatus, the wave source may be understood as an air environment. As shown in FIG. 5 and FIG. 6, in a KEH three-coordinate system, K represents a propagation direction of the electromagnetic wave, E represents an electric field direction, and H represents a magnetic field direction. An origin of the coordinate system may represent a position of the wave source.

With reference to FIG. 5 and FIG. 6, for example, the narrower first part 32b may be closest to the wave source, and the narrower third part 32d may be farthest from the wave source. When the electromagnetic wave is propagated to the first part 32b in a direction K, a propagation direction of the electromagnetic wave changes, and the electromagnetic wave is constrained in a slot to be propagated in an extension direction of the slot. Starting from the first part 32b, the electromagnetic wave may be divided into two paths for propagation. One path of the electromagnetic wave is propagated along a path of the first part 32b, the second part 32c, and the third part 32d, and the other path of the electromagnetic wave is propagated along a path of the first part 32b, the fourth part 32e, and the third part 32d. When propagated to the third part 32d, the two paths of electromagnetic waves are emitted out of the third part 32d in the propagation direction K.

In this embodiment, as shown in FIG. 6, the first part 32b may receive the electromagnetic wave of the wave source, the third part 32d may emit the electromagnetic wave, and the first part 32b and the third part 32d are equivalent to patch antennas. The second part 32c and the fourth part 32e may constrain the electromagnetic wave in the second part 32c and the fourth part 32e for transmission, and the second part 32c and the fourth part 32e may be equivalent to slot transmission lines (slotline).

It can be learned that the first capacitor 32a is configured to change the propagation direction of the electromagnetic wave emitted from the wave source, and constrain the electromagnetic wave to be propagated in the first capacitor 32a, so that the electromagnetic wave can be propagated around the antenna mechanical part 3, and a propagation direction of the electromagnetic wave when the electromagnetic wave is emitted out of the first capacitor 32a can remain unchanged. Therefore, even though the antenna mechanical part 3 blocks the wave source, because of the existence of the first capacitor 32a, the electromagnetic wave can bypass the antenna mechanical part 3 and be propagated to a back side of the antenna mechanical part 3, so that an electromagnetic shadow is reduced or eliminated. In addition, because the propagation direction of the electromagnetic wave may not be changed, it can be ensured that a propagation characteristic of the electromagnetic wave remains unchanged.

Therefore, in the antenna mechanical part 3 in this embodiment, the at least two structural units 32 are disposed on a periphery of the conductive substrate 31, and the first capacitor 32a is formed, so that the conductive substrate 31 has electromagnetic stealth performance relative to the electromagnetic wave, to avoid or reduce blocking of the conductive substrate 31 on the electromagnetic wave.

In this embodiment, because capacitance values of different regions of the first capacitor 32a are different, electromagnetic wave signals of different frequency bands can all resonate in the slot based on respective electrical lengths of the electromagnetic wave signals, so that the electromagnetic waves of the different frequency bands can all pass through the slot. In other words, the capacitance values of the different regions of the first capacitor 32a are different, so that electromagnetic waves of a plurality of frequency bands can be allowed to pass through the slot, to expand a stealth bandwidth.

According to the foregoing principle descriptions, it is easy to understand that, as long as one first capacitor 32a exists in the antenna mechanical part 3, blocking of the conductive substrate 31 on the electromagnetic wave can be mitigated, and the stealth bandwidth can be expanded. Certainly, based on an actual requirement, there may be a plurality of first capacitors 32a.

In this embodiment, a design in which a capacitance value of the first part 32b close to the wave source is large can meet propagation requirements of electromagnetic waves of some frequency bands. However, this is not a limitation on embodiments of this application. In another embodiment, a correspondence between a capacitance value of each region of the first capacitor 32a and a distance from each region of the first capacitor 32a to the wave source may be designed based on a requirement, and is not limited to the foregoing descriptions. For example, for electromagnetic waves of some frequency bands, a region that is close to the wave source in the first capacitor 32a may have a small capacitance value.

In this embodiment, the slot of the first part 32b close to the wave source has a uniform width, and the slot of the second part 32c slightly far away from the wave source has a non-uniform width. This is merely an example, and is not a limitation on embodiments of this application. For example, the slot of the first part 32b close to the wave source may alternatively have a non-uniform width, the slot of the second part 32c slightly far away from the wave source has a uniform width, and the maximum slot width of the first part 32b is less than or equal to the minimum slot width (that is, a slot width at any position of the second part 32c) of the second part 32c, so that the capacitance value of the first part 32b is greater than the capacitance value of the second part 32c.

In this embodiment, the first capacitor 32a is divided into four parts based on a width change of the slot. This is merely an example, and is not a limitation on embodiments of this application. The width change of the slot may be further designed, to obtain another quantity of parts from the first capacitor 32a through division. Actually, based on a product requirement, provided that the slot in embodiments of this application is not a constant-width slot, in this way, the stealth bandwidth can be expanded.

In this embodiment, the first part 32b and the third part 32d are centrally symmetrical, and the second part 32c and the fourth part 32e are centrally symmetrical. This design can ensure that after the electromagnetic wave is emitted out of the first capacitor 32a, a previous propagation direction and propagation characteristic (such as a polarization characteristic and a frequency band) can be maintained. However, this design is merely an example, and is not intended to limit embodiments of this application. For example, the first part 32b and the third part 32d may be only of a consistent shape, but are not required to be centrally symmetrical in position. In this way, although the propagation direction and the propagation characteristic of the electromagnetic wave are changed, reciprocity of an antenna signal can be satisfied, and the electromagnetic wave emitted out of the first capacitor 32a may be refracted to another direction, to further expand a signal scanning range of the antenna apparatus (for example, this solution may be applied to a multiple-input multiple-output MIMO antenna). Alternatively, the first part 32b and the third part 32d may be of different shapes, and are not required to be centrally symmetrical in position.

The foregoing describes a principle design of electromagnetic stealth in this embodiment in detail. The following describes a specific application of the electromagnetic stealth design in this embodiment in the antenna system 2 with reference to FIG. 4.

As shown in FIG. 4, the antenna mechanical part 24 in the antenna system 2 may include a phase shifter 242 and a stealth structure layer 241 that covers an outer surface of the phase shifter 242. The phase shifter 242 is a specific form of the conductive substrate 31, and the stealth structure layer 241 corresponds to the foregoing stealth structure layer. The antenna mechanical part 24 blocks the second radiating element 26 to some extent. However, because the stealth structure layer 241 is disposed, an electromagnetic wave radiated by the second radiating element 26 bypasses the antenna mechanical part 24 and continues being propagated, or the electromagnetic wave bypasses the antenna mechanical part 24 and is received by the second radiating element 26, so that an electromagnetic shadow can be reduced and eliminated. Therefore, the second radiating element 26 may have a large-angle scanning capability, and a dimension (for example, a dimension in a horizontal direction in FIG. 4) of the second radiating element 26 may be extended without being blocked or limited by the front-facing phase shifter 242.

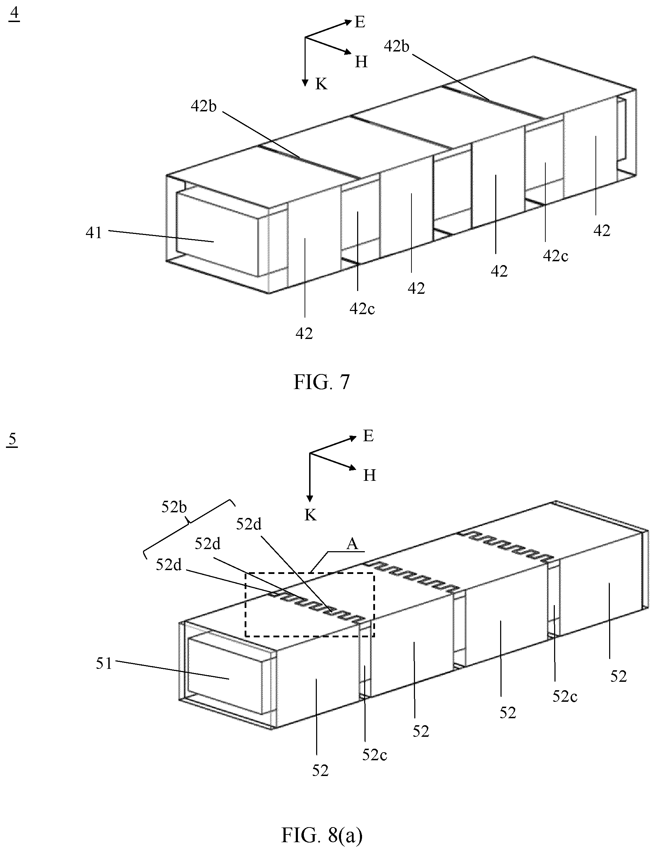

Different from the foregoing embodiment, as shown in FIG. 7, in another embodiment, a conductive substrate 41 of an antenna mechanical part 4 may be approximately a rectangular column structure. A structural unit 42 may be approximately a square tubular structure formed by four flat plates. A first capacitor between adjacent structural units 42 may include a first part 42b and a second part 42c. The first part 42b may be located on a periphery of one side face of the conductive substrate 41, the second part 42c may be located on a periphery of another side face of the conductive substrate 41, and a position of connecting the first part 42b and the second part 42c may be corresponding to an edge of the conductive substrate 41.

As shown in FIG. 7, for example, both the first part 42b and the second part 42c may be rectangular regions, and each of a slot of the first part 42b and a slot of the second part 42c has a uniform width. A slot width of the first part 42b may be less than a slot width of the second part 42c. It may be understood that, the first capacitor between the structural units 42 may further include a third part and a fourth part (not shown due to a view angle of FIG. 7). The third part and the first part 42b may be centrally symmetrical, and the fourth part and the second part 42c may be centrally symmetrical.

In this embodiment, because the slot width of the first part 42b is less than the slot width of the second part 42c, according to the foregoing capacitance formula, a capacitance value of the first part 42b is greater than a capacitance value of the second part 42c. In other words, slot widths of different regions of the first capacitor are different, and therefore, capacitance values of the different regions of the first capacitor are different.

As shown in FIG. 7, for example, a propagation direction K of an electromagnetic wave may be perpendicular to the side face on which the first part 42b of the antenna mechanical part 4 is located, but the solution of this embodiment is not limited thereto. For example, the side face on which the first part 42b is located may alternatively be not perpendicular to the propagation direction K.

The solution in this embodiment enables the conductive substrate 41 to have electromagnetic stealth performance relative to an electromagnetic wave, to avoid or reduce blocking of the conductive substrate 41 on the electromagnetic wave, and further expand a stealth bandwidth. In addition, a structure of a slot on the antenna mechanical part 4 is simple, mass production is good, and a specific product requirement can be met.

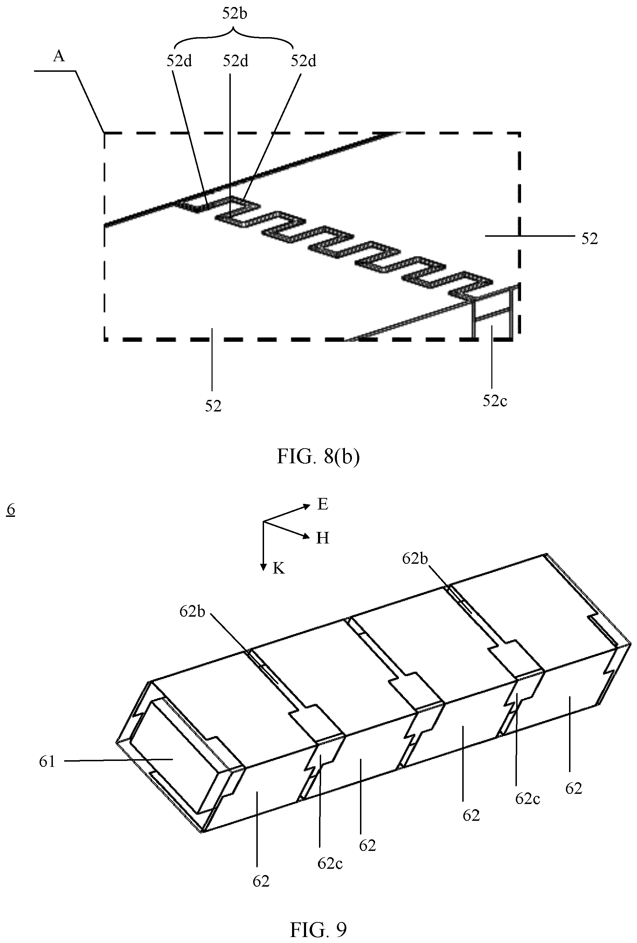

Different from the embodiment shown in FIG. 7, as shown in FIG. 8(a) and FIG. 8(b), in another embodiment, a first capacitor between adjacent structural units 52 of an antenna mechanical part 5 may include a first part 52b and a second part 52c. A slot of the first part 52b may be formed by bending and connecting at least two sub-slots 52d sequentially. To be specific, a plurality of sub-slots 52d are connected sequentially, and every two adjacent sub-slots 52d form a bending angle. The bending angle between the sub-slots 52d may be designed based on a requirement, for example, may be 90°, and such a slot of the first part 52b may form a shape similar to a square wave. In another implementation, the bending angle between the adjacent sub-slots 52d may not be limited to 90°, so that the slot of the first part 52b forms another shape, for example, a curve shape (such as a sine curve or a parabola).

As shown in FIG. 8(b), each sub-slot 52d may have a uniform width, and widths of all sub-slots 52d are the same. Therefore, the width of the sub-slot 52d is also a slot width d1 of the first part 52b. A slot of the second part 52c has a uniform width, and a slot width d2 of the second part 52c may be greater than the slot width of the first part 52b.

In this embodiment, a total slot length formed by connecting all sub-slots 52d in the first part 52b may be greater than a slot length of the second part 52c. For the foregoing capacitance formula C=εS/d (ε is a dielectric constant of a medium between plates, S is a plate area, and d is a distance between the plates), because the slot length of the first part 52b is large, a plate area S1 of the first part 52b is large (where a slot depth of the first part 52b is consistent with a slot depth of the second part 52c). Because the slot length of the second part 52c is small, a plate area S2 of the first part 52b is small.

In this embodiment, for the first part 52b and the second part 52c, (S1/d1)>(S2/d2), so that a capacitance value C1 of the first part 52b is greater than a capacitance value C2 of the second part 52c. In other words, in this embodiment, slot lengths and slot widths of different regions of the first capacitor may be configured, so that capacitance values of different regions of the first capacitor are different.

The solution in this embodiment enables the conductive substrate 51 to have electromagnetic stealth performance relative to an electromagnetic wave, to avoid or reduce blocking of the conductive substrate 41 on the electromagnetic wave, and further expand a stealth bandwidth.

The solution of this embodiment may be applied to the following scenario: When a first part of a regular shape (for example, a rectangular shape) whose slot width is less than a threshold cannot be manufactured due to a limitation of a manufacturing process, it may be considered that the first part is designed as the first part 52b (the first part 52b may be considered as an irregular shape) shown in FIG. 8(a), and a slot length is increased to compensate for a process limitation that a slot width cannot be made smaller, so that the first part has a large capacitance value. Therefore, the design of this embodiment can match an existing manufacturing process, and mass production performance is good.

In another embodiment, a solution different from the embodiment shown in FIG. 8(a) may be used, provided that (S1/d1)>(S2/d2) is ensured so that the capacitance value of the first part is greater than the capacitance value of the second part.

For example, in an implementation, the first part may be formed by bending and connecting at least two sub-slots sequentially. The slot length of the first part is greater than the slot length of the second part, each sub-slot has a uniform width, widths of all sub-slots are consistent, the slot of the second part has a uniform width, and the slot width of the second part is equal to the slot width of the first part.

Alternatively, in another implementation, the first part may be formed by bending and connecting at least two sub-slots sequentially. The slot length of the first part is greater than the slot length of the second part, but a width of the sub-slot is not limited (for example, the sub-slot may have a non-uniform slot, and widths of sub-slots are not totally the same). The slot width of the second part is not limited either (for example, a second slot may have a non-uniform width, and a value relationship between the slot width of the second slot and the width of the sub-slot is not limited).

Alternatively, in another implementation, the first part may be formed by bending and connecting at least two sub-slots sequentially, and the second part may also be formed by bending and connecting at least two sub-slots sequentially. This is not limited herein.

Different from the embodiment shown in FIG. 7, as shown in FIG. 9, in another embodiment, a first capacitor between adjacent structural units 62 of an antenna mechanical part 6 may include a first part 62b and a second part 62c. The second part 62c may cross an edge of the conductive substrate 61, and may be distributed on a periphery of two adjacent side faces of the conductive substrate 61. To be specific, a part of the second part 62c is located on one side face, the other part of the second part 62c is located on the other side face, and the two parts of the second part 62c are bent and connected. The first part 62b may cross another edge of the conductive substrate 61, and may be distributed on a periphery of two adjacent side faces of the conductive substrate 61 (the complete first part 62b is not shown due to a view angle in FIG. 9). **In** addition, a propagation direction K of an electromagnetic wave is not perpendicular to any side face of the antenna mechanical part 6.

The solution in this embodiment enables the conductive substrate 61 to have electromagnetic stealth performance relative to an electromagnetic wave, to avoid or reduce blocking of the conductive substrate 61 on the electromagnetic wave, and further expand a stealth bandwidth. In addition, a structure of a slot on the antenna mechanical part 6 is simple, mass production is good, and a specific product requirement can be met. The following describes a specific application of the solution shown in FIG. 9.

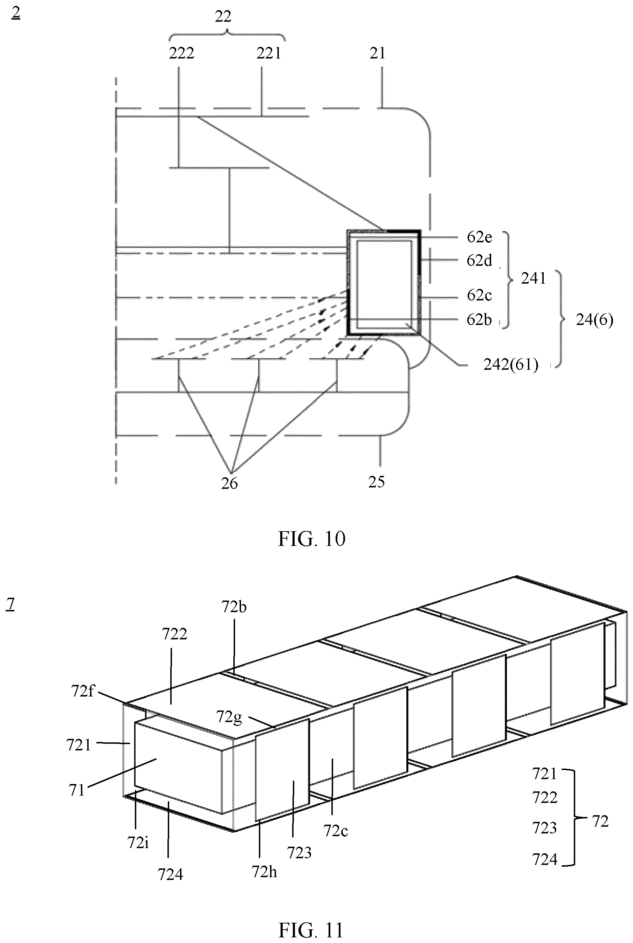

FIG. 10 shows a specific application of the electromagnetic stealth design shown in FIG. 9 in the antenna system 2 shown in FIG. 4. To highlight the focus, FIG. 10 shows a part of the antenna system 2. As shown in FIG. 9 and FIG. 10, the antenna mechanical part 6 in the antenna system 2 may be specifically the antenna mechanical part 24, the conductive substrate 61 may be specifically the phase shifter 242 of the antenna mechanical part 24, and the stealth structure layer 241 is disposed on a periphery of the phase shifter 242. The stealth structure layer 241 includes a first capacitor, and the first capacitor includes a first part 62b, a second part 62c, a third part 62d, and a fourth part 62e. For example, the first part 62b and the third part 62d are centrally symmetrical, and the second part 62c and the fourth part 62e are centrally symmetrical.

As shown in FIG. 10, for example, the second radiating element 26 is used as a wave source. The second radiating element 26 is closest to the first part 62b. An electromagnetic wave radiated by the second radiating element 26 is approximately propagated to two adjacent side faces of the antenna mechanical part 24 in a "sloping direction", so that the first part 62b is distributed on the two side faces, convenient for the first part 62b to receive the electromagnetic wave and constrain the electromagnetic wave to be propagated in the first capacitor, and finally the electromagnetic wave is emitted out of the third part 62d. Because the first part 62b is distributed in a form of "cross an edge of the phase shifter 242", the second part 62c, the third part 62d, and the fourth part 62e are also distributed in the form of "cross an edge of the phase shifter 242". It can be learned that, regions that are of different capacitance values and that are of the first capacitor are all distributed on two adjacent side faces of the phase shifter 242, so that a position of the wave source can be matched, to implement a good electromagnetic stealth effect.

Same as the embodiment shown in FIG. 7, as shown in FIG. 11, in another embodiment, an antenna mechanical part 7 includes a conductive substrate 71 and at least two structural units 72, a first capacitor is formed between adjacent structural units 72, and the first capacitor may include a first part 72b and a second part 72c.

Different from the embodiment shown in FIG. 7, as shown in FIG. 11, the structural unit 72 in this embodiment is not an integrated structure, but has a coupling slot inside. Parts of the structural unit 72 located on two sides of the coupling slot are completely separated and not connected, and the parts located on the two sides of the coupling slot may be coupled via the coupling slot. For example, the structural unit 72 may include a first part 721, a second part 722, a third part 723, and a fourth part 724, and the four parts may be respectively located on different side faces of the conductive substrate 71. There is a coupling slot 72f between the first part 721 and the second part 722, there is a coupling slot 72g between the second part 722 and the third part 723, there is a coupling slot 72h between the third part 723 and the fourth part 724, and there is a coupling slot 72i between the fourth part 724 and the first part 721. The foregoing four coupling slots may divide the structural unit 72 into the four independent parts. When an electromagnetic wave is propagated to the structural unit 72, the electromagnetic wave may "cross" these coupling slots. Therefore, parts in the structural unit 72 that are located on two sides of the coupling slots are coupled via the coupling slots.

As shown in FIG. 11, for example, each coupling slot extends along an edge of the conductive substrate 71. The structural unit 72 has four coupling slots, and the four coupling slots divide the structural unit 72 into four independent parts. The foregoing is merely an example, and is not intended to limit embodiments. Based on a product requirement, a position and an extension direction of the coupling slot may be flexibly designed, and there may be at least one coupling slot. In addition, each of structural units 72 may have coupling slots, or only some structural units 72 may have coupling slots.

In this embodiment, the coupling slot is formed in the structural unit 72, so that different parts of the structural unit 72 are sequentially assembled on the conductive substrate 71, and finally assembled into a complete structural unit 72. In this way, reliable assembly of the structural unit 72 can be implemented in some scenarios. Especially when a size of the conductive substrate 71 is large and a quantity of structural units 72 is large, an assembly process can be simplified in a split assembly manner, and an assembly yield is improved. In addition, the coupling slot can allow electromagnetic waves of some frequency bands to pass through, so that the antenna mechanical part 7 has a function of expanding a stealth bandwidth to some extent.

It may be understood that a coupling slot design in this embodiment may be applied to any other embodiment of this application as needed.

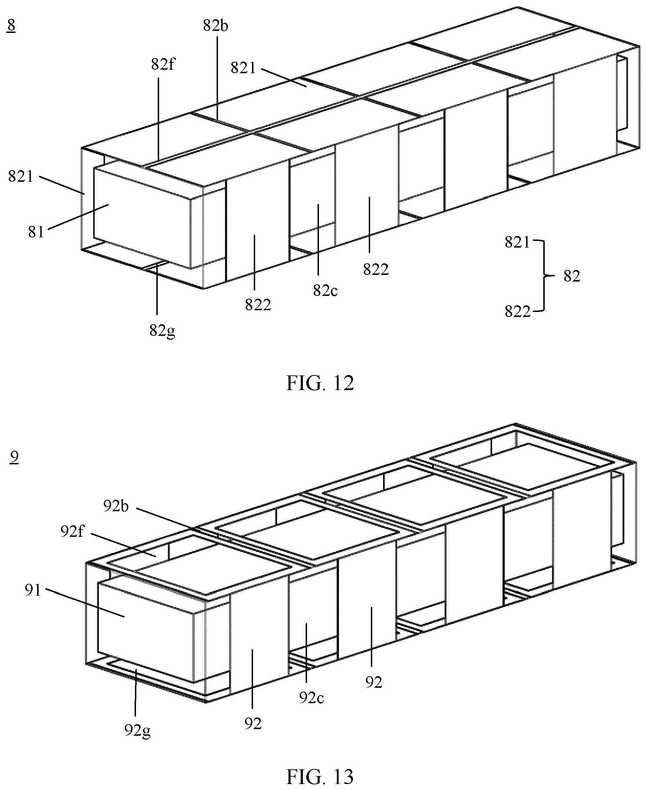

Same as the embodiment shown in FIG. 11, as shown in FIG. 12, in another embodiment, an antenna mechanical part 8 includes a conductive substrate 81 and at least two structural units 82, a first capacitor is formed between adjacent structural units 82, and the first capacitor may include a first part 82b and a second part 82c. The structural unit 82 is not an integrated structure, but has a coupling slot inside. Parts of the structural unit 82 located on two sides of the coupling slot are completely separated and not connected, and the parts located on the two sides of the coupling slot may be coupled via the coupling slot.

Different from the embodiment shown in FIG. 11, as shown in FIG. 12, the structural unit 82 in this embodiment may have a coupling slot 82f and a coupling slot 82g, and the coupling slot 82f and the coupling slot 82g may be respectively located on two opposite sides of the structural unit 82. For example, both the coupling slot 82f and the coupling slot 82g may be approximately in the middle of the side face of the structural unit 82, but not at an edge of the structural unit 82. The coupling slot 82f and the coupling slot 82g may divide the structural unit 82 into a first part 821 and a second part 822, and both the first part 821 and the second part 822 may be approximately in a C-shaped structure. For example, a stealth structure layer in this embodiment may have a periodic structure. Therefore, coupling slots on a same side of all structural units 82 may be collinear.

In this embodiment, the coupling slot is formed in the structural unit 82, so that different parts of the structural unit 82 are sequentially assembled on the conductive substrate 81, and finally assembled into a complete structural unit 82. In this way, reliable assembly of the structural unit 82 can be implemented in some scenarios. Especially when a size of the conductive substrate 81 is large and a quantity of structural units 82 is large, an assembly process can be simplified in a split assembly manner, and an assembly yield is improved. Because a quantity of components of the structural unit 82 is small, an assembly process may be simplified to some extent. In addition, the coupling slot can allow electromagnetic waves of some frequency bands to pass through, so that the antenna mechanical part 8 has a function of expanding a stealth bandwidth to some extent.

It may be understood that a coupling slot design in this embodiment may be applied to any other embodiment of this application as needed, including embodiments to be described below.

Same as the embodiment shown in FIG. 7, as shown in FIG. 13, in another embodiment, an antenna mechanical part 9 includes a conductive substrate 91 and at least two structural units 92, a first capacitor is formed between adjacent structural units 92, and the first capacitor may include a first part 92b and a second part 92c.

Different from the embodiment shown in FIG. 7, as shown in FIG. 13, a local region of each structural unit 92 may be hollowed out to form a hollow region. For example, two opposite side faces of each structural unit 92 may form a hollow, and a hollow region 92f and a hollow region 92g are respectively formed. In another implementation, positions and a quantity of hollow regions may be designed based on a product requirement, which is not limited to that shown in FIG. 13. For example, the hollow region needs to be formed only on at least one structural unit 92.

In this embodiment, the hollow region is formed on the structural unit 92. This can reduce a weight and help reduce a weight of the antenna mechanical part 9. Especially when the structural unit 92 is a heavy metal member, providing the hollow region can greatly reduce the weight. In addition, when an electromagnetic wave is propagated to a place near the antenna mechanical part 9, an electromagnetic field is mainly distributed at the first capacitor, and an electromagnetic field in a remaining region is very weak. Therefore, providing the hollow region basically does not affect a propagation characteristic of the electromagnetic wave.

It may be understood that a hollow-out design in this embodiment may be applied to any other embodiment of this application, including embodiments to be described below.

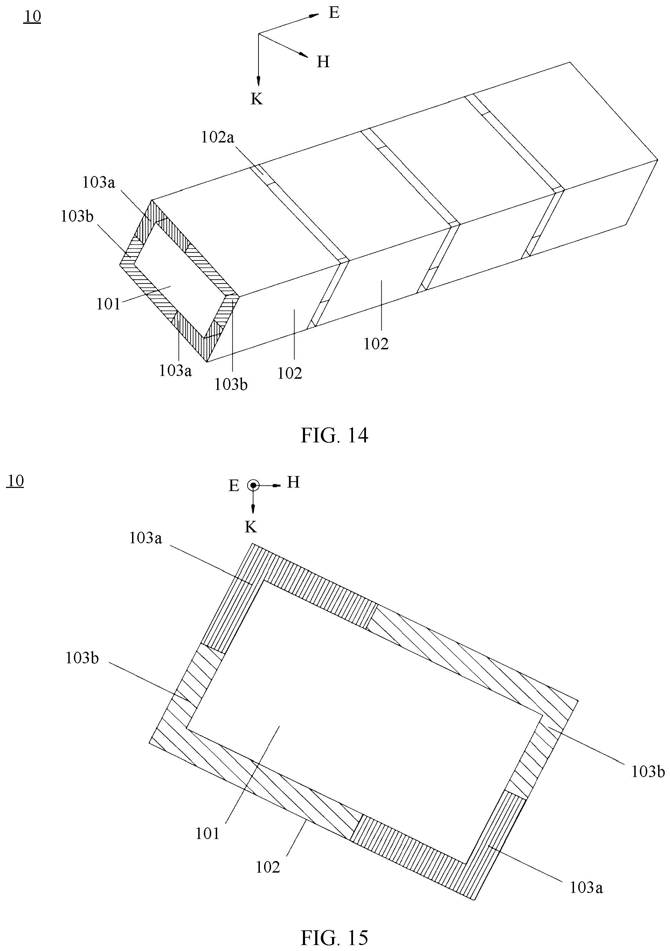

Same as the foregoing embodiments, in an embodiment shown in FIG. 14, an antenna mechanical part 10 may include a conductive substrate 101 and at least two structural units 102, and a first capacitor 102a is formed between adjacent structural units 102.

Different from the foregoing embodiments, the first capacitor 102a in FIG. 14 may have a uniform slot width, in other words, slot widths at various positions of the first capacitor 102a may be consistent. In addition, an insulation medium may be filled between the structural unit 102 and the conductive substrate 101, and the insulation medium may cover, for example, an entire outer circumferential surface of the conductive substrate 101. The insulation medium may include a first insulation medium 103a and a second insulation medium 103b, and a dielectric constant of the first insulation medium 103a may be greater than a dielectric constant of the second insulation medium 103b. For example, the first insulation medium 103a and the second insulation medium 103b may extend from one end of the conductive substrate 101 to the other end in a length direction of the conductive substrate 101, and the first insulation medium 103a and the second insulation medium 103b may be alternately arranged in a circumferential direction of the conductive substrate 101, to form an arrangement manner shown in FIG. 15: the first insulation medium 103a-the second insulation medium 103b-the first insulation medium 103a-the second insulation medium 103b. The first insulation medium 103a may be distributed on two adjacent side faces of the conductive substrate 101, and the second insulation medium 103b may also be distributed on two adjacent side faces of the conductive substrate 101. Both the first insulation medium 103a and the second insulation medium 103b may cross an edge of the conductive substrate 101.

In this embodiment, a first part, a second part, a third part, and a fourth part may be defined in the first capacitor 102a. The first part is closest to a wave source, and the first part is filled with the first insulation medium 103a. The second part is adjacent to the first part, and the second part is filled with the second insulation medium 103b. The third part is opposite to the first part (for example, the third part and the first part may be centrally symmetrical), and the third part is filled with the first insulation medium 103a. The fourth part is opposite to the second part (for example, the fourth part and the second part may be centrally symmetrical), and the fourth part is filled with the second insulation medium 103b.

According to the foregoing capacitance formula C=εS/d (ε is a dielectric constant of a medium between plates, S is a plate area, and d is a distance between the plates), for each region of the first capacitor 102a, when S and d are consistent, because a dielectric constant of the first insulation medium 103a in the first part is large, a capacitance value of the first part is large. Because a dielectric constant of the second insulation medium 103b in the second part is small, a capacitance value of the first part is small. A capacitance value of the third part may be equal to the capacitance value of the first part, and a capacitance value of the fourth part may be equal to the capacitance value of the second part. Therefore, in this embodiment, the first capacitor 102a may have a uniform slot width, and insulation media with different dielectric constants are filled in different regions of the first capacitor 102a, so that capacitance values of the different regions of the first capacitor 102a are different.

The solution in this embodiment enables the conductive substrate 101 to have electromagnetic stealth performance relative to an electromagnetic wave, to avoid or reduce blocking of the conductive substrate 101 on the electromagnetic wave, and further expand a stealth bandwidth. In addition, as shown in FIG. 15, a propagation direction K of the electromagnetic wave may not be perpendicular to any side face of the antenna mechanical part 10. This design enables the antenna mechanical part 10 to be used in the antenna system 2 shown in FIG. 10. Regions that are of different capacitance values and that are of the first capacitor 102a are all distributed on two adjacent side faces of a phase shifter 242, so that a position of the wave source can be matched, to implement a good electromagnetic stealth effect. A detailed principle is described above, and is not repeated herein.

It may be understood that, in this embodiment, a design in which capacitance values of different regions are different is implemented by filling insulation media with different dielectric constants, and may be applied to any other embodiment of this application as needed. For example, a slot size (including a width size, a length size, and the like), a slot pattern (which means that the slot is an entire slot, or is formed by bending and connecting a plurality of sub-slots sequentially shown in FIG. 8(a)), and slot distribution (which means that the slot is distributed only on one side face of the conductive substrate or distributed on two adjacent side faces) of the first capacitor may not be limited, and insulation media with different dielectric constants are filled in different regions of the first capacitor. A shape size, a position size, and the dielectric constant of the insulation medium of the slot are comprehensively configured, so that the capacitance value of the first part is finally greater than the capacitance value of the second part.

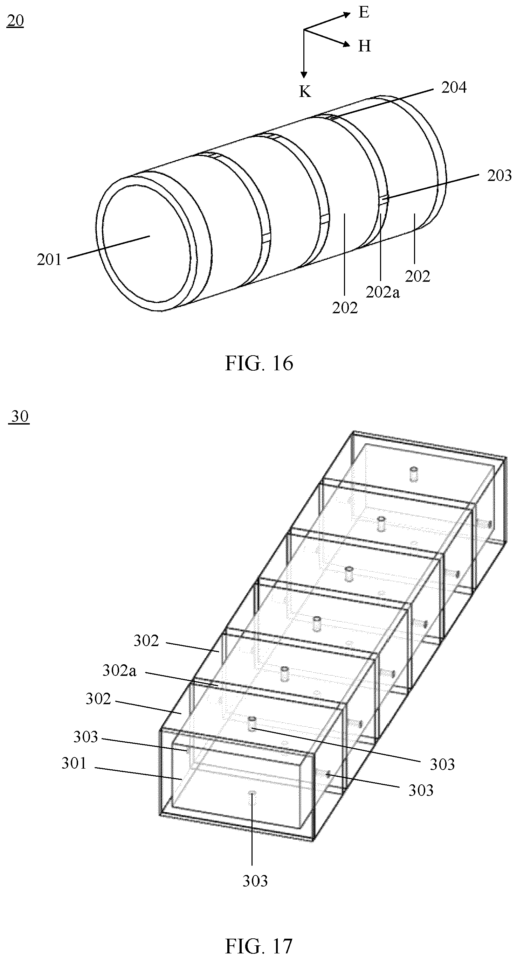

Same as the embodiment shown in FIG. 14, in an embodiment shown in FIG. 16, an antenna mechanical part 20 may include a conductive substrate 201 and at least two structural units 202, and a first capacitor 202a is formed between adjacent structural units 202.

Different from the embodiment shown in FIG. 14, as shown in FIG. 16, the first capacitor 202a may not need to be filled with an insulation medium, or may be filled with insulation media with a same dielectric constant. In addition, capacitor components with different capacitance values may be respectively mounted in different regions of the first capacitor 202a. For example, a first capacitor component 204 may be mounted in a region closest to and farthest from a wave source (due to a limitation of a view angle in FIG. 16, the first capacitor component 204 that is farthest from the wave source and located below is not displayed), and a second capacitor component 203 may be mounted in a region adj acent to the first capacitor component 204. A region in which the first capacitor component 204 is mounted may be referred to as a first part and a third part, and a region in which the second capacitor component 203 is mounted may be referred to as a second part and a fourth part. A capacitance value of the first capacitor component 204 is greater than a capacitance value of the second capacitor component 203. The first capacitor component 204 may be a capacitor component with a fixed capacitance value, or may be a capacitor component (for example, a varactor) that can change a capacitance value under signal control. The second capacitor component 203 may be a capacitor component with a fixed capacitance value, or may be a capacitor component (for example, a varactor) that can change a capacitance value under signal control. The first capacitor component 204 may also be referred to as a second capacitor, and the second capacitor component 203 may also be referred to as a third capacitor.

The first capacitor component 204 and the second capacitor component 203 may be fastened in a slot, for example, through welding. A quantity of first capacitor components 204 and a quantity of second capacitor components 203 may be determined based on a requirement. This is not limited in embodiments.

A capacitance value of each region of the first capacitor 202a may be equal to a capacitance value calculated according to the foregoing capacitance formula C=εS/d (ε is a dielectric constant of a medium between plates, S is a plate area, and d is a distance between the plates) plus a capacitance value of the capacitor component in the region. For each region of the first capacitor 202a, when ε, S, and d are consistent, capacitance values calculated according to the capacitance formula C=εS/d are equal. Because the first capacitor component 204 with a large capacitance value is disposed in the first part, the capacitance value of the first part is large; and because the second capacitor component 203 with a small capacitance value is disposed in the second part, the capacitance value of the second part is small. A capacitance value of the third part may be equal to the capacitance value of the first part, and a capacitance value of the fourth part may be equal to the capacitance value of the second part.

Therefore, in this embodiment, the first capacitor 202a has a uniform slot width, and capacitor components with different capacitance values are mounted in different regions of the first capacitor 202a, so that capacitance values of the different regions of the first capacitor 202a are different.

The solution in this embodiment enables the conductive substrate 201 to have electromagnetic stealth performance relative to an electromagnetic wave, to avoid or reduce blocking of the conductive substrate 201 on the electromagnetic wave, and further expand a stealth bandwidth. For example, when the capacitor component is a capacitor component with a variable capacitance, a capacitance of the capacitor component in a corresponding region may be adaptively adjusted based on a change of a scanning angle of a wave source, to adjust a capacitance value of the region, and ensure an electromagnetic stealth effect of the antenna mechanical part 20 on the wave source.

Another variant solution can be easily obtained according to the principle of this embodiment. For example, a capacitor component (for example, the first part) may be disposed only in a part of the first capacitor 202a, and no capacitor component is disposed in another region, so that the capacitance values of the different regions of the first capacitor 202a may also be different. In addition, a design in which a capacitor component is disposed in a region to affect a capacitance value of the region may be applied to any embodiment of this application based on a requirement. For example, a slot size, a slot pattern, slot distribution, an insulation medium filling status, and the like of the first capacitor may not be limited, and a capacitor component is mounted in the first capacitor. A shape size, a position size, a dielectric constant of an insulation medium, and a capacitance value of the capacitor component are comprehensively configured, so that the capacitance value of the first part is finally greater than the capacitance value of the second part.

In any one of the foregoing embodiments, a capacitor (for example, referred to as a plate capacitor) may be formed between the structural unit and the conductive substrate, and the plate capacitor may affect a frequency band of an electromagnetic wave that bypasses the antenna mechanical part. For a product need (for example, a need to reduce a volume), it may be desirable to reduce a spacing between the structural unit and the conductive substrate. However, a decrease in the spacing may cause an increase in the frequency band of the electromagnetic wave that bypasses the antenna mechanical part, and change a propagation characteristic of the electromagnetic wave.

In view of this, based on any one of the foregoing embodiments, the antenna mechanical part may further include an inductive element. The inductive element may be disposed in the spacing between the structural unit and the conductive substrate, and connected to the structural unit and the conductive substrate, so that the structural unit is electrically connected to the conductive substrate. The inductive element and the foregoing plate capacitor may form a parallel resonant circuit, and the parallel resonant circuit can reduce the frequency band of the electromagnetic wave that bypasses the antenna mechanical part. Therefore, disposing the inductive element and reducing the spacing between the structural unit and the conductive substrate may counteract each other's impact on the frequency band, so that the frequency band of the electromagnetic wave that bypasses the antenna mechanical part remains unchanged, to maintain the propagation characteristic of the electromagnetic wave.

In this embodiment, the inductive element may be a conductor mechanical part, for example, a metal column. The inductive element may be equivalent to an inductor, and the inductive element facilitates mechanical processing of the antenna mechanical part. Alternatively, the inductive element may be directly an inductor.

In this embodiment, a position of the inductive element may be designed based on a requirement, for example, to be at a specific distance from the first capacitor, to avoid being too close. A quantity of inductive elements may be designed based on a requirement. For example, each structural unit may be connected to the conductive substrate through at least one inductive element, or only some structural units are connected to the conductive substrate through the inductive element.

FIG. 17 shows an antenna mechanical part 30 using the inductive element design in this embodiment. As shown in FIG. 17, an antenna mechanical part 30 may include a conductive substrate 301 and at least two structural units 302, and a first capacitor 302a is formed between adjacent structural units 302. Each side face of the structural unit 302 is connected to the conductive substrate 301 through an inductive element 303, and a plurality of inductive elements 303 are disposed between each structural unit 302 and the conductive substrate 301. It may be understood that the antenna mechanical part 30 shown in FIG. 17 is merely an example, and is not intended to limit an application environment of the inductive element 303.

The foregoing describes embodiments of this application in detail. Specific examples are used in this specification to describe the principle and embodiments of this application. The descriptions of the foregoing embodiments are merely intended to help understand the method and the core idea of this application. In addition, a person of ordinary skill in the art may make modifications to the specific embodiments and an application range according to the idea of this application. Therefore, the content of this specification shall not be construed as a limitation to this application.

## Claims

1. An antenna mechanical part, used in a base station antenna system, wherein
the antenna mechanical part comprises a conductive substrate and at least two structural units, each of the at least two structural units encircles the conductive substrate once, each structural unit and the conductive substrate are spaced apart, the at least two structural units comprise a first structural unit and a second structural unit that are adjacent to each other, the first structural unit and the second structural unit are spaced apart to form a first capacitor, and capacitance values of different parts of the first capacitor are different.

2. The antenna mechanical part according to claim 1, wherein
the first capacitor comprises a first part, a second part, a third part, and a fourth part, wherein the first part, the second part, the third part, and the fourth part are sequentially connected end to end, a capacitance value of the first part is equal to a capacitance value of the third part, a capacitance value of the second part is equal to a capacitance value of the fourth part, and the capacitance value of the first part is different from the capacitance value of the second part.

3. The antenna mechanical part according to claim 2, wherein
the first part and the third part are centrally symmetrically distributed, and the second part and the fourth part are centrally symmetrically distributed.

4. The antenna mechanical part according to any one of claims 1 to 3, wherein
there is a slot between the first structural unit and the second structural unit, and slot widths of different parts of the first capacitor are different.

5. The antenna mechanical part according to claim 4, wherein
the first capacitor comprises the first part and the second part that are connected to each other; and
each of a slot of the first part and a slot of the second part has a same width, a slot width of the first part is less than a slot width of the second part, and the capacitance value of the first part is greater than the capacitance value of the second part; or
one of a slot of the first part and a slot of the second part has a same width, the other one has a variable width, a maximum slot width of the first part is less than or equal to a minimum slot width of the second part, and the capacitance value of the first part is greater than the capacitance value of the second part.

6. The antenna mechanical part according to any one of claims 1 to 5, wherein
there is a slot between the first structural unit and the second structural unit, the first capacitor comprises the first part and the second part that are connected to each other, the slot of the first part is formed by bending and connecting at least two sub-slots sequentially, and the capacitance value of the first part is greater than the capacitance value of the second part.

7. The antenna mechanical part according to claim 6, wherein
the slot of the second part has a same width, each sub-slot of the first part has a same width, all the sub-slots have a consistent width, and a width of the sub-slot is less than or equal to the slot width of the second part.

8. The antenna mechanical part according to any one of claims 1 to 7, wherein
the first capacitor comprises the first part and the second part that are connected to each other, the first part is filled with a first insulation medium, the second part is filled with a second insulation medium, a dielectric constant of the first insulation medium is greater than a dielectric constant of the second insulation medium, and the capacitance value of the first part is greater than the capacitance value of the second part.

9. The antenna mechanical part according to any one of claims 1 to 8, wherein
the first capacitor comprises the first part and the second part that are connected to each other; and
the antenna mechanical part comprises a second capacitor, the second capacitor is disposed in the first part, and the capacitance value of the first part is greater than the capacitance value of the second part.

10. The antenna mechanical part according to claim 9, wherein
the antenna mechanical part comprises a third capacitor, the third capacitor is disposed in the second part, and a capacitance value of the third capacitor is less than a capacitance value of the second capacitor.

11. The antenna mechanical part according to claim 10, wherein
the capacitance value of the second capacitor and/or the capacitance value of the third capacitor are/is adjustable.

12. The antenna mechanical part according to any one of claims 1 to 11, wherein
at least one structural unit is provided with a coupling slot, and parts of the structural unit that are respectively located on two sides of the coupling slot are separated by the coupling slot, and are coupled via the coupling slot.

13. The antenna mechanical part according to any one of claims 1 to 12, wherein
the antenna mechanical part comprises an inductive element, and a structural unit in the at least two structural units is connected to the conductive substrate through the inductive element.

14. The antenna mechanical part according to any one of claims 1 to 13, wherein
at least one structural unit is hollowed out.

15. The antenna mechanical part according to any one of claims 1 to 14, wherein
structures of the at least two structural units are the same, there is a slot between any two adjacent structural units, slots are of a same shape, and the first capacitor is formed between any two adjacent structural units.

16. The antenna mechanical part according to any one of claims 1 to 14, wherein
structures of the at least two structural units are not totally the same, and/or there is a slot between the at least two structural units, shapes of slots are not totally the same, and the first capacitor is formed between any two adjacent structural units.

17. The antenna mechanical part according to any one of claims 1 to 16, wherein
each structural unit comprises a conductor layer and an insulation layer, and the insulation layer is located between the conductor layer and the conductive substrate; or
each structural unit is a conductor.

18. The antenna mechanical part according to any one of claims 1 to 17, wherein
the base station antenna system comprises a pole, a pole support, and a feeding network, and the conductive substrate comprises at least one of the pole, the pole support, and the feeding network.

19. An antenna, comprising
a radiating element and the antenna mechanical part according to any one of claims 1 to 18.

20. A base station, comprising
a pole and a first antenna, wherein the first antenna is fastened to the pole, and the first antenna is the antenna according to claim 19.

21. The base station according to claim 20, wherein
the base station comprises a second antenna and a frequency selective surface, the frequency selective surface is located between a radiating element of the first antenna and a radiating element of the second antenna, and the frequency selective surface is configured to reflect a radiation signal of the first antenna and transmit a radiation signal of the second antenna.
